(19) Europäisches Patentamt
European Patent Office
Office européen des brevets

(11) **EP 3 404 868 A1**

(12) **EUROPEAN PATENT APPLICATION**
published in accordance with Art. 153(4) EPC

(43) Date of publication:
**21.11.2018 Bulletin 2018/47**

(51) Int Cl.:
***H04L 9/08*** *(2006.01)*

(21) Application number: **17746731.3**

(22) Date of filing: **10.01.2017**

(86) International application number:
**PCT/CN2017/070797**

(87) International publication number:
**WO 2017/133411 (10.08.2017 Gazette 2017/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.02.2016 CN 201610079672**

(71) Applicant: **Huawei Technologies Co., Ltd.**
**Longgang District**
**Shenzhen, Guangdong 518129 (CN)**

(72) Inventors:
• **LEI, Hao**
**Shenzhen**
**Guangdong 518129 (CN)**
• **MA, Wenping**
**Xi'an**
**Shaanxi 710071 (CN)**

(74) Representative: **Epping - Hermann - Fischer**
**Patentanwaltsgesellschaft mbH**
**Schloßschmidstraße 5**
**80639 München (DE)**

(54) **SESSION KEY NEGOTIATION METHOD, DEVICE, AND SYSTEM**

(57) Embodiments of the present invention provide a session key negotiation method, apparatus, and system. The session key negotiation method in the present invention includes: obtaining, by first user equipment, a vector $\sigma_B$ according to a long-term private key $s_B$ and a temporary private key $y_B$ that correspond to the first user equipment, and a received long-term public key $P_A$ and a received temporary public key $x_A$ that correspond to second user equipment performing session negotiation with the first user equipment; calculating and obtaining $\bar{v}_B$ according to the vector $\sigma_B$ by using a formula $\bar{v}_B = dbl(\sigma_B)$; obtaining a semaphore $v_B$ according to $\bar{v}_B$ by using a formula $v_B = \langle \bar{v}_B \rangle_2$; and calculating and obtaining a session key K according to $v_B$ by using a formula

$$K = \left[ \bar{v}_B \right]_2 = \left[ \frac{2}{q} \bullet \bar{v}_B \right],$$

where $q$ is an even number and is not equal to 2.

FIG. 3

**Description**

**TECHNICAL FIELD**

The present invention relates to information security and communications technologies, and in particular, to a session key negotiation method, apparatus, and system.

**BACKGROUND**

A key exchange protocol in the prior art can ensure that two or more users establish a shared session key in a public network environment by exchanging information. The users participating in communication encrypt communication data by using the shared session key, to ensure security of network communication. An authentication key exchange protocol is key negotiation with an authentication function, and can authenticate identities of two parties participating in the key negotiation, thereby effectively defending against an attack from a third party.

Currently, a working principle of the authentication key exchange protocol is mainly: For randomly selected $a \in R_q$, according to $R\text{-}DLWE_{q,x}$, a party A and a party B requiring authentication key negotiation (1) respectively select $(s_A, e_A) \leftarrow \chi$ and $(s_B, e_B) \leftarrow \chi$ secretly; (2) respectively calculate $b_A = a \cdot s_A + e_A$ and $b_B = a \cdot s_B + e_B$, where $b_A$ and $b_B$ are public; and (3) respectively calculate $s_A \cdot b_B$ and $s_B \cdot b_A$ by using respective secrets $s_A$ and $s_B$. Because $s_A \cdot b_B = s_A a s_B + s_A e_B \approx s_A a s_B \approx s_B a$-$s_A + s_B e_A = s_B \cdot b_A$, $s_A \cdot b_B - s_B \cdot b_A = s_A e_B - s_B e_A$. If an error $\|s_A e_B - s_B e_A\|$ between the two parties is within a particular range, the two parties may cancel the error, and calculate a common secret $s_A a s_B$. Because $s_A a s_B$ is related to only the respective secrets $s_A$ and $s_B$ of the two parties, only the party A and the party B know $s_A a s_B$.

In addition, to cancel the error $\|s_A e_B - s_B e_A\|$, so that the both parties can correctly recover $s_A a s_B$, a characteristic function $Cha(v)$ and a modular function $Mod_2(w,b)$ are mainly used, so that the two parties recover common information $s_A a s_B$. The characteristic function $Cha(v)$ is defined as follows:

$$Cha(v) : \mathbb{Z}_q \to \mathbb{Z}_2 :$$

where

$$v \in \mathbb{Z}_q = \{-\frac{q-1}{2}, \cdots, \frac{q-1}{2}\} :$$

$$Cha(v) = \begin{cases} 0 & v \in E = \left\{-\left\lfloor\frac{q}{4}\right\rfloor, \cdots, \left\lceil\frac{q}{4}\right\rceil\right\} \\ 1 & v \in \left\{-\frac{q-1}{2}, \cdots, \frac{q-1}{2}\right\} - E \end{cases}.$$

The modular function $Mod_2(w,b)$ is defined as follows:

$$Mod_2(w,b) : \mathbb{Z}_q \times \mathbb{Z}_2 \to \mathbb{Z}_2,$$

where $v \in \mathbb{Z}_q$ and $b \in \mathbb{Z}_2$ :

$$Mod_2(v,b) = \left(v + b \cdot \frac{q-1}{2}\right) \bmod q \bmod 2.$$

Specifically, $s_A a s_B$ is recovered bit by bit by using the modular function $Mod_2(w,b)$. Using one bit as an example, $q$ is an odd prime, and $b = Cha(v) \in \mathbb{Z}_2$ is given. For $w = v + 2e$, if an error is $e \in \mathbb{Z}_q$, and $|e| < q/2$, $Mod_2(v, Cha(v)) = Mod_2(w, Cha(v))$. In other words, when a distance between w and v is within a particular range ($w = v + 2e$), the two parties each may calculate one common secret bit $\bar{b}$ based on $w,v$ by using the common characteristic function $Cha(v)$ and the modular function $Mod_2(w,b)$:

$$Mod_2(v, Cha(v)) = \bar{b} = Mod_2(w, Cha(v)).$$

When $q$ is an odd prime and $w, v \in_R \mathbb{Z}_q$ is given:

    1. if $Cha(v) = 0$, a deviation in outputting 0/1 from $Mod_2(w, Cha(v))$ is $1/2|E|$; or
    2. if $Cha(v) = 1$, a deviation in outputting 0/1 from $Mod_2(w, Cha(v))$ is $1/(|E|-1)$.

However, a common secret bit $\bar{b} \in \{0,1\}$ calculated by using the modular function $Mod_2(w, Cha(v))$ is not evenly distributed. Therefore, to prevent a third party from obtaining one bit of a key and therefore affecting security during use, in the prior art, the odd prime $q$ needs to be subexponential, leading to problems of increasing traffic and calculation costs. In addition, in the prior art, a power basis is further used to represent an element on a quotient ring $R_q = \mathbb{Z}_q[x]/(x^n + 1)$, and $n = 2^k$. For an expression of the power basis on the quotient ring $R_q$,

a larger size of the power basis indicates a larger size of the element on the quotient ring $R_q$, and therefore, the problems of heavy traffic and high calculation costs are caused.

## SUMMARY

The present invention provides a session key negotiation method, apparatus, and system, to resolve problems of heavy traffic and high calculation costs in the prior art.

A first aspect of the present invention provides a session key negotiation method, including:

receiving, by first user equipment, a long-term public key $P_A$ and a temporary public key $x_A$ that correspond to second user equipment performing session negotiation with the first user equipment;

obtaining, by the first user equipment, a vector $\sigma_B$ according to a long-term private key $s_B$ and a temporary private key $y_B$ that correspond to the first user equipment, the long-term public key $P_A$, and the temporary public key $x_A$;

obtaining, by the first user equipment, $\overline{v}_B$ according to the vector $\sigma_B$ by using a formula $\overline{v}_B = dbl(\sigma_B)$;

obtaining, by the first user equipment, a semaphore $v_B$ according to $\overline{v}_B$ by using a formula $v_B = \langle \overline{v}_B \rangle_2$; and

obtaining, by the first user equipment, a session key $K$ according to the semaphore $v_B$ by using a formula

$$K = \left[ \overline{v}_B \right]_2 = \left[ \frac{2}{q} \cdot \overline{v}_B \right],$$ where

$q$ is an even number and is not equal to 2.

With reference to the first aspect, it may be understood that a manner of the obtaining a vector $\sigma_B$ may be specifically:

obtaining, by the first user equipment, the temporary private key $y_B$ according to system parameters $a$ and $f_B$ by using a formula $y_B = a \cdot r_B + f_B \in R_q$;

obtaining, by the first user equipment, $d$ and $e$ according to the temporary public key $x_A$ corresponding to the second user equipment, the temporary private key $y_B$ corresponding to the first user equipment, identity information B corresponding to the first user equipment, and identity information A corresponding to the second user equipment by using formulas $d = H(x_A, B)$ and $e = H(y_B, A)$ respectively; and

obtaining, by the first user equipment, $\sigma_B$ according to the long-term private key $s_B$ corresponding to the first user equipment, the long-term public key $P_A$ and the temporary private key $x_A$ that correspond to the second user equipment, $d$, and $e$ by using a formula $\sigma_B = g \cdot (x_A + d \cdot P_A) \cdot (r_B + e \cdot s_B) \in R_q$, where

$a \in R_q = \mathbb{Z}_q \left[ \zeta_m \right]$; $r_B \leftarrow \chi$; $f_B \leftarrow \chi$; $g$ is a system parameter, and $g \in R$; $R$ is a cyclotomic ring, and $R_q$ is a quotient ring defined on

$$R = \mathbb{Z}\left[ \zeta_m \right] = \mathbb{Z}\left[ x \right] \Big/ \Phi_m \left( x \right);$$ and $m$ is a positive integer.

With reference to the first aspect, optionally, the identity information A and B are bit strings representing identity card numbers or fingerprint information.

With reference to the first aspect, it should be noted that the method further includes:

obtaining, by the first user equipment, a long-term public key $P_B$ corresponding to the first user equipment according to $s_1$ and $e_1$ by using a formula $P_B = a \cdot s_1 + e_1 \in R_q$;

sending, by the first user equipment, a registration request carrying the long-term public key $P_B$ to an authentication center, so that when authenticating, according to the registration request, that the long-term public key $P_B \neq 0$, the authentication center obtains $b_c$, $[v]_2$, and $\langle v \rangle_2$ according to $s$, $e$, and $e'$ by using formulas $b_c = a \cdot s + e$ and $v = g \cdot b \cdot s + e'$, and returns $b_c$ and $\langle v \rangle_2$ to the first user equipment; and

obtaining, by the first user equipment, $w$ according to the received $b_c$ and $\langle v \rangle_2$ by using formulas $u = g \cdot b_c \cdot s_1$ and $w = rec(u, \langle v \rangle_2)$, and sending $w$ to the authentication center, so that when authenticating that $w = \langle v \rangle_2$, the authentication center sends a first certificate $Cert_B$ to the first user equipment, to certify that the first user equipment owns the long-term public key $P_B$, where
$s_1$, $e_1 \leftarrow \chi$; $s$, $e$, and $e' \leftarrow \chi$.

With reference to the first aspect, optionally, the method further includes:

sending, by the first user equipment, the long-term public key $P_B$, the temporary private key $y_B$, and the semaphore $v_B$ of the first user equipment to the second user equipment, so that the second user equipment obtains the session key $K$ within a preset error range according to a long-term private key $s_A$ and the temporary private key $x_A$ that correspond to the second user equipment, the long-term public key $P_B$, the temporary private key $y_B$, and the semaphore $v_B$, where

the preset error range is $\left[ -\frac{q}{8}, \frac{q}{8} \right)$.

A second aspect of the present invention provides a session key negotiation method, including:

receiving, by second user equipment, a long-term public key $P_B$, a semaphore $v_B$, and a temporary private key $y_B$ that are of first user equipment performing session negotiation with the second user equipment and that are sent by the first user equipment;

obtaining, by the second user equipment, a vector $\sigma_A$ according to a long-term private key $s_A$ and a temporary private key $x_A$ that correspond to the second user equipment, the long-term public key $P_B$, and the temporary private key $y_B$; and

obtaining, by the second user equipment, a session key K corresponding to the second user equipment within the preset error range according to the vector $\sigma_A$ and the semaphore $v_B$ by using a formula $K=rec(\sigma_A,v_B)$, where

the preset error range is $\left[-\dfrac{q}{8}, \dfrac{q}{8}\right)$, and $q$ is an even number and is not equal to 2.

With reference to the second aspect, it should be noted that the method further includes:

the obtaining, by the second user equipment, a vector $\sigma_A$ according to a long-term private key $s_A$ and a temporary private key $x_A$ that correspond to the second user equipment, the long-term public key $P_B$, and the temporary private key $y_B$ includes:

obtaining, by the second user equipment, the temporary private key $x_A$ according to system parameters $a$ and $f_A$ by using a formula $x_A=a\cdot r_A+f_A\in R_q$;

obtaining, by the second user equipment, $d$ and $e$ according to the temporary private key $x_A$ corresponding to the first user equipment, the temporary private key $y_B$, identity information B corresponding to the first user equipment, and identity information A corresponding to the second user equipment by using formulas $d=H(x_A,B)$ and $e=H(y_B,A)$ respectively; and

obtaining, by the second user equipment, the vector $\sigma_A$ according to the long-term private key $s_A$ corresponding to the second user equipment, the long-term public key $P_B$ and the temporary private key $y_B$ that correspond to the first user equipment, $d$, and $e$ by using a formula $\sigma_A=g\cdot(y_B+d\cdot P_B)\cdot(r_A+e\cdot s_A)\in R_q$, where

$a\in R_q=\mathbb{Z}_q\left[\zeta_m\right]$; $r_A\leftarrow\chi$; $f_A\leftarrow\chi$; $g$ is a system parameter, and $g\in R$; $R$ is a cyclotomic ring, and $R_q$ is a quotient ring defined on

$R=\mathbb{Z}\left[\zeta_m\right]=\dfrac{\mathbb{Z}[x]}{\Phi(x)}$; and m is a positive integer.

With reference to the second aspect, optionally, the identity information A and B are bit strings representing identity card numbers or fingerprint information.

With reference to the second aspect, it may be understood that the method further includes:

obtaining, by the second user equipment, a long-term public key $P_A$ corresponding to the first user equipment according to $s_1$ and $e_1$ by using a formula $P_A=a\cdot s_1+e_1\in R_q$;

sending, by the second user equipment, a registration request carrying the long-term public key $P_A$ to an authentication center, so that when authenticating, according to the registration request, that $P_A\neq0$, the authentication center obtains $b_c$, $[v]_2$, and $\langle v\rangle_2$ according to $s$, $e$, and $e'$ by using formulas $b_c=a\cdot s+e$ and $v=g\cdot b\cdot s+e'$, and returns $b_c$ and $\langle v\rangle_2$ to the second user equipment; and

obtaining, by the second user equipment, $w$ according to the received $b_c$ and $\langle v\rangle_2$ by using formulas $u=g\cdot b_c\cdot s_1$ and $w=rec(u,\langle v\rangle_2)$, and sending $w$ to the authentication center, so that when authenticating that $w=\langle v\rangle_2$, the authentication center sends a second certificate $Cert_A$ to the second user equipment, to certify that the second user equipment owns the long-term public key $P_A$, where $s_1$, $e_1\leftarrow\chi$; $s$, $e$, and $e'\leftarrow\chi$.

A third aspect of the present invention provides a session key negotiation apparatus, including:

a transceiver module, configured to receive a long-term public key $P_A$ and a temporary public key $x_A$ that correspond to second user equipment performing session negotiation with the session key negotiation apparatus;

a vector obtaining module, configured to obtain a vector $\sigma_B$ according to a long-term private key $s_B$ and a temporary private key $y_B$ that correspond to the session key negotiation apparatus, the long-term public key $P_A$, and the temporary public key $x_A$;

a first calculation module, configured to obtain $\bar{v}_B$ according to the vector $\sigma_B$ by using a formula $\bar{v}_B=dbl(\sigma_B)$;

a semaphore obtaining module, configured to obtain a semaphore $v_B$ according to $\bar{v}_B$ by using a formula $v_B=\langle\bar{v}_B\rangle_2$; and

a session key obtaining module, configured to obtain a session key $K$ according to the semaphore $v_B$ by using a formula $K=\left[\bar{v}_B\right]_2=\left[\dfrac{2}{q}\cdot\bar{v}_B\right]$, where $q$ is an even number and is not equal to 2.

With reference to the third aspect, it may be understood that the vector obtaining module in the apparatus includes:

a temporary private key obtaining unit, configured to obtain the temporary private key $y_B$ according to system parameters $a$ and $f_B$ by using a formula $y_B=a{\cdot}r_B+f_B{\in}R_q$;

a calculation unit, configured to obtain $d$ and $e$ according to the temporary public key $x_A$ corresponding to the second user equipment, the temporary private key $y_B$ corresponding to the first user equipment, identity information B corresponding to the session key negotiation apparatus, and identity information A corresponding to the second user equipment by using formulas $d=H(x_A,B)$ and $e=H(y_B,A)$ respectively; and

a vector obtaining unit, configured to obtain $\sigma_B$ according to the long-term private key $s_B$ corresponding to the session key negotiation apparatus, the long-term public key $P_A$ and the temporary private key $x_A$ that correspond to the second user equipment, $d$, and $e$ by using a formula $\sigma_B=g{\cdot}(x_A+d{\cdot}P_A){\cdot}(r_B+e{\cdot}s_B){\in}R_q$, where

$$a \in R_q = \mathbb{Z}_q\left[\zeta_m\right];$$ $r_B{\leftarrow}\chi$; $f_B{\leftarrow}\chi$, $g$ is a system parameter, and $g{\in}R$; $R$ is a cyclotomic ring, and $R_q$ is a quotient ring defined on

$$R = \mathbb{Z}\left[\zeta_m\right] = \frac{\mathbb{Z}[x]}{\Phi_m(x)};$$ and m is a positive integer.

With reference to the third aspect, it may be pointed out that the apparatus further includes:

a long-term public key obtaining module, configured to obtain a long-term public key $P_B$ corresponding to the session key negotiation apparatus according to $s_1$ and $e_1$ by using a formula $P_B=a{\cdot}s_1+e_1{\in}R_q$, where the transceiver module is further configured to send a registration request carrying the long-term public key $P_B$ to an authentication center, so that when authenticating, according to the registration request, that the long-term public key $P_B{\neq}0$, the authentication center obtains $b_c$, $[v]_2$, and ${\langle}v{\rangle}_2$ according to $s$, $e$, and $e'$ by using formulas $b_c=a{\cdot}s+e$ and $v=g{\cdot}b{\cdot}s+e'$, and returns $b_c$ and ${\langle}v{\rangle}_2$ to the session key negotiation apparatus; and

a second calculation module, configured to obtain $w$ according to the received $b_c$ and ${\langle}v{\rangle}_2$ by using formulas $u=g{\cdot}b_c{\cdot}s_1$ and $w=rec(u,{\langle}v{\rangle}_2)$, where the transceiver module is further configured to send $w$ to the authentication center, so that when authenticating that $w=[v]_2$, the authentication center sends a first certificate $Cert_B$ to the session key negotiation apparatus, to certify that the session key negotiation apparatus owns the long-term public key $P_B$, where $s_1$, $e_1{\leftarrow}\chi$; $s$, $e$, and $e'{\leftarrow}\chi$.

With reference to the third aspect, optionally, the transceiver module is further configured to send the long-term public key $P_B$, the temporary private key $y_B$, and the semaphore $v_B$ of the session key negotiation apparatus to the second user equipment, so that the second user equipment obtains the session key $K$ within a preset error range according to a long-term private key $s_A$ and the temporary private key $x_A$ that correspond to the second user equipment, the long-term public key $P_B$, the temporary private key $y_B$, and the semaphore $v_B$, where

the preset error range is $\left[-\dfrac{q}{8},\dfrac{q}{8}\right)$.

A fourth aspect of the present invention provides a session key negotiation apparatus, including:

a transceiver module, configured to receive a long-term public key $P_B$, a semaphore $v_B$, and a temporary private key $y_B$ that are of first user equipment performing session negotiation with the session key negotiation apparatus and that are sent by the first user equipment;

a vector obtaining module, configured to obtain a vector $\sigma_A$ according to a long-term private key $s_A$ and a temporary private key $x_A$ that correspond to the session key negotiation apparatus, the long-term public key $P_B$, and the temporary private key $y_B$; and

a session key obtaining module, configured to obtain a session key K corresponding to the session key negotiation apparatus within the preset error range according to the vector $\sigma_A$ and the semaphore $v_B$ by using a formula $K=rec(\sigma_A,v_B)$, where

the preset error range is $\left[-\dfrac{q}{8},\dfrac{q}{8}\right)$, and $q$ is an even number and is not equal to 2.

With reference to the fourth aspect, it may be pointed out that the vector obtaining module in the apparatus includes:

a temporary private key obtaining unit, configured to obtain the temporary private key $x_A$ according to system parameters $a$ and $f_A$ by using a formula $x_A=a{\cdot}r_A+f_A{\in}R_q$;

a calculation unit, configured to obtain $d$ and $e$ according to the long-term public key $P_B$ and the temporary private key $x_A$ that correspond to the first user equipment, the temporary private key $y_B$, identity information B corresponding to the first user equipment, and identity information A corresponding to the session key negotiation apparatus by using formulas $d=H(x_A,B)$ and $e=H(y_B,A)$ respectively; and

a vector obtaining unit, configured to obtain the vector $\sigma_A$ according to the long-term private key $s_A$ corresponding to the session key negotiation apparatus, the long-term public key $P_B$ and the temporary private key $y_B$ that correspond to the first user equipment, $d$, and $e$ by using a formula $\sigma_A = g \cdot (y_B + d \cdot P_B) \cdot (r_A + e \cdot s_A) \in R_q$, where

$$a \in R_q = \mathbb{Z}_q[\zeta_m];$$ $r_A \leftarrow \chi$; $f_A \leftarrow \chi$; g is a system parameter, and $g \in R$; $R$ is a cyclotomic ring, and $Rq$ is a quotient ring defined on

$$R = \mathbb{Z}[\zeta_m] = \mathbb{Z}[x] \Big/ \Phi(x);$$ and m is a positive integer.

With reference to the fourth aspect, optionally, the apparatus further includes:

a long-term public key obtaining module, configured to obtain a long-term public key $P_A$ corresponding to the first user equipment according to $s_1$ and $e_1$ by using a formula $P_A = a \cdot s_1 + e_1 \in R_q$, where
the transceiver module is further configured to send a registration request carrying the long-term public key $P_A$ to an authentication center, so that when authenticating, according to the registration request, that $P_A \neq 0$, the authentication center obtains $b_c$, $[v]_2$, and $\langle v \rangle_2$ according to $s$, $e$, and $e'$ by using formulas $b_c = a \cdot s + e$ and $v = g \cdot b \cdot s + e'$, and returns $b_c$ and $\langle v \rangle_2$ to the session key negotiation apparatus; and
a calculation module, configured to obtain $w$ according to the received $b_c$ and $\langle v \rangle_2$ by using formulas $u = g \cdot b_c \cdot s_1$ and $w = rec(u, \langle v \rangle_2)$, where
the transceiver module is further configured to send $w$ to the authentication center, so that when authenticating that $w = [v]_2$, the authentication center sends a second certificate $Cert_A$ to the session key negotiation apparatus, to certify that the session key negotiation apparatus owns the long-term public key $P_A$, where
$s_1$, $e_1 \leftarrow \chi$; $s$, $e$, and $e' \leftarrow \chi$.

A fifth aspect of the present invention provides a session key negotiation system, including:

first user equipment and second user equipment that performs session negotiation with the first user equipment, where
the first user equipment is the session key negotiation apparatus described in the third aspect, and the second user equipment is the session key negotiation apparatus described in the fourth aspect.

With reference to the fifth aspect, it may be understood that the first user equipment and the second user equipment in the system are in a distributed network environment.
In the session key negotiation method, apparatus, and system in the embodiments of the present invention, the first user equipment obtains the vector $\sigma_B$ according to the long-term private key $s_B$ and the temporary private key $y_B$ that correspond to the first user equipment and the received long-term public key $P_A$ and temporary public key $x_A$ that correspond to the second user equipment performing session negotiation with the first user equipment; obtains the semaphore $v_B$ according to the vector $\sigma_B$ by using a randomized function and a cross-rounding function; and calculates and obtains the session key $K$ according to the semaphore $v_B$ by using a modulo-2 rounding function. If $x \in \mathbb{Z}_q$ is randomly uniform, the modulo-2 rounding function $[x]_2$ is uniformly distributed on $\mathbb{Z}_2$, thereby effectively ensuring security of the session key. In addition, because q is an even number, the problems in the prior art that the traffic and calculation costs are increased are further effectively resolved.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic diagram of a network architecture that serves as a basis of a session key negotiation method according to the present invention;
FIG. 2 is a diagram of a negotiation running process of session key negotiation according to the present invention;
FIG. 3 is a flowchart of Embodiment 1 of a session key negotiation method according to the present invention;
FIG. 4 is a flowchart of Embodiment 2 of a session key negotiation method according to the present invention;
FIG. 5A and FIG. 5B are flowcharts of Embodiment 3 of a session key negotiation method according to the present invention;
FIG. 6 is a flowchart of Embodiment 4 of a session key negotiation method according to the present invention;
FIG. 7 is a flowchart of Embodiment 5 of a session key negotiation method according to the present invention;
FIG. 8 is a flowchart of Embodiment 6 of a session key negotiation method according to the present invention;
FIG. 9 is a schematic structural diagram of Embodiment 1 of a session key negotiation apparatus according to the present invention;

FIG. 10 is a schematic structural diagram of Embodiment 2 of a session key negotiation apparatus according to the present invention;

FIG. 11 is a schematic structural diagram of Embodiment 3 of a session key negotiation apparatus according to the present invention;

FIG. 12 is a schematic structural diagram of Embodiment 4 of a session key negotiation apparatus according to the present invention;

FIG. 13 is a schematic structural diagram of Embodiment 5 of a session key negotiation apparatus according to the present invention;

FIG. 14 is a schematic structural diagram of Embodiment 6 of a session key negotiation apparatus according to the present invention; and

FIG. 15 is a schematic structural diagram of user equipment according to an embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

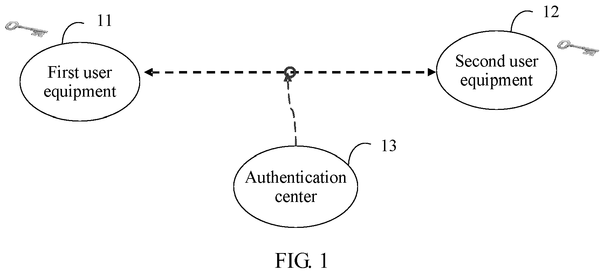

FIG. 1 is a schematic diagram of a network architecture that serves as a basis of a session key negotiation method according to the present invention. As shown in FIG. 1, the network architecture mainly includes first user equipment 11 and second user equipment 12. Session key negotiation between the first user equipment 11 and the second user equipment 12 is performed in a distributed network environment. That is, only the first user equipment 11 and the second user equipment 12 know a session key established between the first user equipment and the second user equipment, and no third party knows the session key. In addition, optionally, the network architecture may further include an authentication center 13. That is, before the first user equipment 11 and the second user equipment 12 perform session key negotiation, authentication needs to be performed. That is, the first user equipment 11 can determine that it is the second user equipment 12, but not another device, that performs key negotiation with the first user equipment. Similarly, the second user equipment 12 can determine that it is the first user equipment, but not another device, that performs key negotiation with the second user equipment.

In the present invention, a current protocol is constructed on a quotient ring $R_q$ of a cyclotomic ring

$$R = \mathbb{Z}[\zeta_m] = \mathbb{Z}[x] \Big/ \Phi_m(x).$$

System parameters are specifically described as follows:

$m$ is a positive integer, and describes a regulation of the $m$-order cyclotomic ring

$$R = \mathbb{Z}[\zeta_m] = \mathbb{Z}[x] \Big/ \Phi_m(x),$$

and a degree of $\Phi_m(x)$ is $n=\varphi(m)$;

$q$ is an odd prime: $\gcd(q,m)=1$;

$g=\Pi_p(1-z_p)$, and p traverses all odd primes that can be exactly divided by m;

$[\psi]$ is discrete Gaussian distribution on an algebraic number field $K$, and $\psi = D_{\sqrt{2}r}$;

$H(\cdot):\{0,1\}^*\to R$: any string is mapped to an element that satisfies the discrete Gaussian distribution $\chi=[\psi]$ and that is located on $R = \mathbb{Z}[\zeta_m]$; and

$$a \in R_q = \mathbb{Z}_q[\zeta_m]:$$ a a global public parameter.

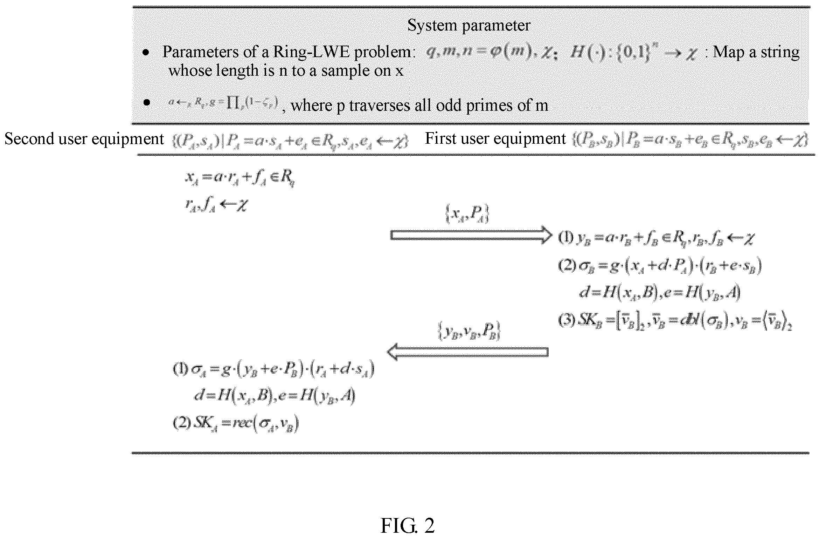

In addition, each of the first user equipment 11 and the second user equipment 12 is identified by using a pair of a long-term public key and a long-term private key. A generation manner is simply described as follows: Using the second user equipment 12 as an example, the second user equipment 12 samples $s_A\leftarrow\chi$ and $e_A\leftarrow\chi$, where $e_A$ is a noise vector; and uses $s_A\in R_q$ as a long-term private key of the second user equipment, calculates $P_A=a\cdot s_A+e_A\in R_q$, and uses $P_A=a\cdot s_A+e_A\in R_q$ as a long-term public key of the second user equipment. It is assumed that a session key K to be negotiated about between the first user equipment 11 and the second user equipment 12 may be $K=SK_{AB}$. FIG. 2 is a diagram of a negotiation running process of session key negotiation. That is, a specific negotiation process is shown in FIG. 2.

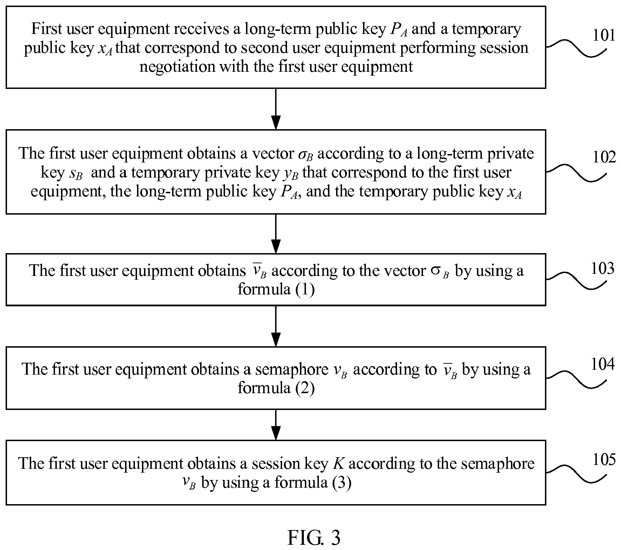

FIG. 3 is a flowchart of Embodiment 1 of a session key negotiation method according to the present invention. As shown in FIG. 3, the method in this embodiment may include the following steps.

Step 101. First user equipment receives a long-term public key $P_A$ and a temporary public key $x_A$ that correspond to second user equipment performing session negotiation with the first user equipment.

Step 102. The first user equipment obtains a vector $\sigma_B$ according to a long-term private key $s_B$ and a temporary private key $y_B$ that correspond to the first user equipment, the long-term public key $P_A$, and the temporary public key $x_A$.

In this embodiment, session key negotiation between the first user equipment and the second user equipment is performed in a distributed network environment.

Step 103. The first user equipment performs the following operation according to the vector $\sigma_B$ by using a formula (1):

$$\overline{v}_B = dbl(\sigma_B) \quad (1)$$

obtaining $v_B$.

In this embodiment, dbl represents a randomized function (randomized function).

Step 104. The first user equipment performs the following operation according to $\overline{v}_B$ by using a formula (2):

$$v_B = \left\langle \overline{v}_B \right\rangle_2 \qquad (2)$$

obtaining a semaphore $v_B$.

In this embodiment, $v_B$ is a "semaphore" obtained after $\overline{v}_B$ is input to a cross-rounding function. A cross-rounding function (cross-rounding function) $\langle \ \rangle_2$:

$\mathbb{Z}_q \to \mathbb{Z}_2$ is defined as $x \mapsto \left\lfloor \dfrac{4}{q} \bullet x \right\rfloor \bmod 2$. With reference to definitions of the following modulo-2 rounding function and cross-rounding function, a relationship between an interval of $x \in \mathbb{Z}_q$ and a value of $\langle x \rangle_2$ is as follows:

$$\left\langle x \right\rangle_2 = b \Leftrightarrow x \in I_b \cup \left( \frac{q}{2} + I_b \right), \quad \forall b \in \{0,1\} .$$

In addition, for an even number $q$, if $x \in \mathbb{Z}_q$ is randomly uniform, and $\langle x \rangle_2$ is given, $[x]_2$ is evenly distributed on $\mathbb{Z}_2 = \{0,1\}$. That is, for evenly distributed $x \in \mathbb{Z}_q$, $\langle x \rangle_2 = b$ is given. In this case, a probability of $[x]_2 = b$ and a probability of $[x]_2 = 1-b$ are both 1/2. That is, $\langle x \rangle_2 = b$ is given, if $x \in \mathbb{Z}_q$ is not leaked, $[x]_2$ is secure in terms of information theory.

Step 105. The first user equipment performs the following operation according to the semaphore $v_B$ by using a formula (3):

$$K = \left[ \overline{v}_B \right]_2 = \left[ \frac{2}{q} \bullet \overline{v}_B \right] \qquad (3)$$

obtaining a session key $K$.

$q$ is an even number and is not equal to 2.

In this embodiment, a modulo-2 rounding function $[\ ]_2 : \mathbb{Z}_q \to \mathbb{Z}_2$ is defined as $\left\lfloor \dfrac{2}{q} \bullet x \right\rceil$. For $x \in \mathbb{Z}_q$, an absolute minimum complete residue system $I = \left\{ -\dfrac{q}{2}, -\dfrac{q}{2}+1, \cdots, 0, 1, \cdots \dfrac{q}{2}-1 \right\}$ of $\mathbb{Z}_q$ is used, and q is an even number and is not 2:

(1). $I_0=\{0,1,2,\cdots,[q/4]-1\}$, $I_1=\{-[q/4],\cdots,-1\}\bmod q$, and $I_0 \cup I_1$ enables $[x]_2=0$; and

(2). $\left( \dfrac{q}{2}+I_0 \right) \cup \left( \dfrac{q}{2}+I_1 \right)$ includes all elements that enable $[x]_2=1$.

In this embodiment, the first user equipment obtains the vector $\sigma_B$ according to the long-term private key $s_B$ and the temporary private key $y_B$ that correspond to the first user equipment and the received long-term public key $P_A$ and temporary public key $x_A$ that correspond to the second user equipment performing session negotiation with the first user equipment; obtains the semaphore $v_B$ according to the vector $\sigma_B$ by using the randomized function and the cross-rounding function; and obtains the session key $K$ according to the semaphore $v_B$ by using the modulo-2 rounding function. Because $x \in \mathbb{Z}_q$ is randomly uniform, the modulo-2 rounding function $[x]_2$ is uniformly distributed on $\mathbb{Z}_2$, thereby effectively ensuring security of the session key. In addition, because q is an even number, problems in the prior art that traffic and calculation costs are increased are further effectively resolved.

The following describes, in detail by using several specific embodiments, the technical solution of the method embodiment shown in FIG. 1.

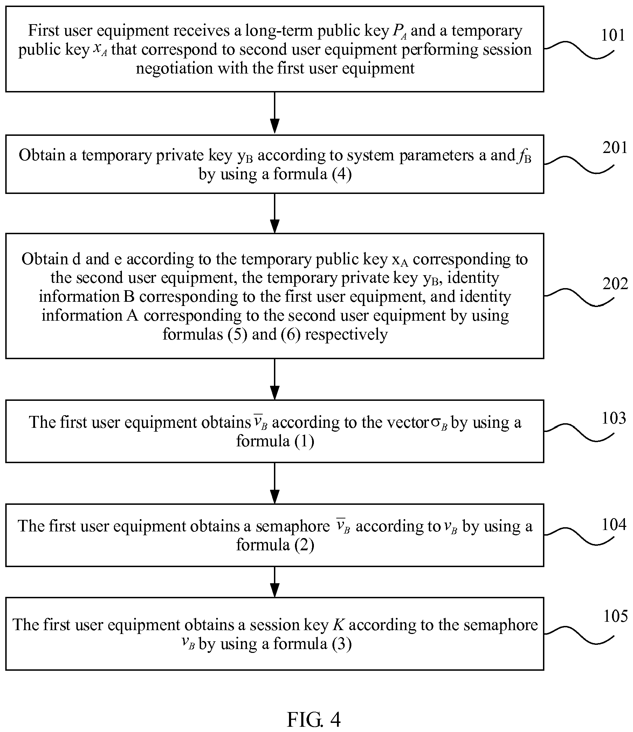

FIG. 4 is a flowchart of Embodiment 2 of a session key negotiation method according to the present invention. Based on the embodiment shown in FIG. 3, as shown in FIG. 4, a specific implementation of step 102 is:

Step 201. Perform the following operation according to system parameters $a$ and $f_B$ by using a formula (4):

$$y_B = a \bullet r_B + f_B \in R_q \qquad (4)$$

obtaining the temporary private key $y_B$.

Step 202. Perform the following operation according to the temporary public key $x_A$ corresponding to the second user equipment, the temporary private key $y_B$ corresponding to the first user equipment, identity information B corresponding to the first user equipment, and identity information A corresponding to the second user equipment by using formulas (5) and (6):

$$d = H\left(x_A, B\right) \quad (5)$$

$$e = H\left(y_B, A\right) \quad (6)$$

respectively obtaining $d$ and $e$.

In this embodiment, each of the identity information A and the identity information B may represent a bit string that is coded as 0 and 1 by an authentication center, such as an identity card number or fingerprint information.

Step 203. Perform the following operation according to the long-term private key $s_B$ corresponding to the first user equipment, the long-term public key $P_A$ and the temporary private key $x_A$ that correspond to the second user equipment, $d$, and $e$ by using a formula (7):

$$\sigma_B = g \bullet \left(x_A + d \bullet P_A\right) \bullet \left(r_B + e \bullet s_B\right) \in R_q \quad (7)$$

obtaining $\sigma_B$. $a \in R_q = \mathbb{Z}_q\left[\zeta_m\right]$; $r_B \leftarrow \chi$; $f_B \leftarrow \chi$; $g$ is a system parameter, and $g \in R$ ; $R$ is a cyclotomic ring, and $R_q$ is a quotient ring defined on $R = \mathbb{Z}\left[\zeta_m\right] = \mathbb{Z}[x] \big/ \Phi_m(x)$. In addition, m is a positive integer, and describes a regulation of the m-order cyclotomic ring $R = \mathbb{Z}\left[\zeta_m\right] = \mathbb{Z}[x] \big/ \Phi_m(x)$, and a degree of $\Phi_m(x)$ is $n = \varphi(m)$. $\gcd(q,m)=1$. $g = \Pi_p(1-\zeta_p)$, and $p$ traverses all odd primes that can be exactly divided by m. $[\psi]$ is discrete Gaussian distribution on an algebraic number field K, and $\psi = D_{\sqrt{2}r}$. $H(\cdot):\{0,1\}^* \to R$ represents that any string is mapped to an element that satisfies the discrete Gaussian distribution $\chi = [\psi]$ and that is located on $R = \mathbb{Z}\left[\zeta_m\right]$. $a \in R_q = \mathbb{Z}_q\left[\zeta_m\right]$ represents a global public parameter.

In this embodiment, in a case of a general cyclotomic polynomial ring, a decoding basis (a dual of a conjugate of a powerful basis) is used to represent an element on a ring R and is used for calculation, so that a relatively small element representation and calculation cost can be obtained.

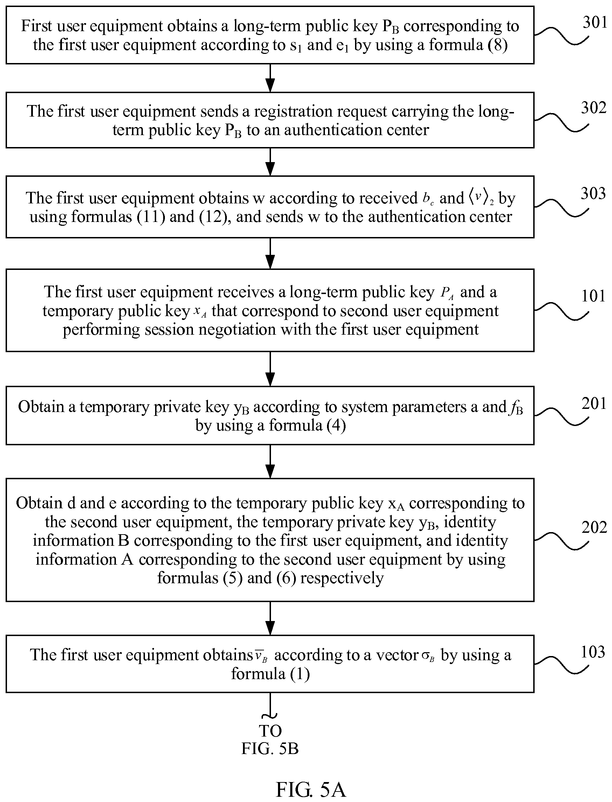

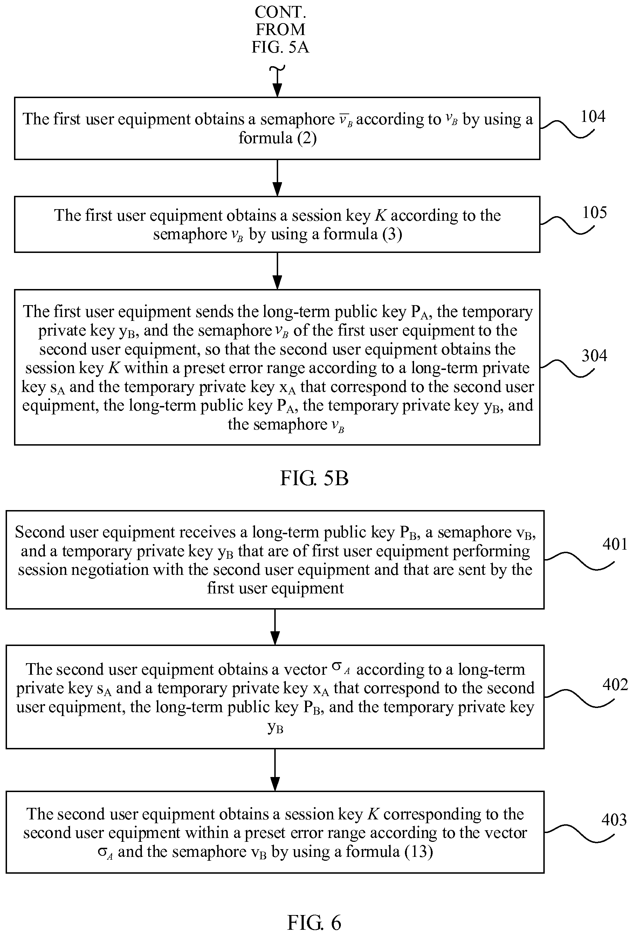

FIG. 5A and FIG. 5B are flowcharts of Embodiment 3 of a session key negotiation method according to the present invention. Based on the embodiment shown in FIG. 4, as shown in FIG. 5A and FIG. 5B, before step 101, the method may further include the following steps.

Step 301. The first user equipment performs the following operation according to $s_1$ and $e_1$ by using a formula (8):

$$P_B = a \bullet s_1 + e_1 \in R_q \quad (8)$$

obtaining a long-term public key $P_B$ corresponding to the first user equipment.

Step 302. The first user equipment sends a registration request carrying the long-term public key $P_B$ to the authentication center, so that when authenticating, according to the registration request, that the long-term public key $P_B \neq 0$, the authentication center performs the following operations according to $s$, $e$, and $e'$ by using formulas (9) and (10):

$$b_c = a \bullet s + e \quad (9)$$

$$v = g \bullet b \bullet s + e' \quad (10)$$

obtaining $b_c$, $[v]_2$, and $\langle v \rangle_2$, and returning $b_c$ and $\langle v \rangle_2$ to the first user equipment.

Step 303. The first user equipment performs the following operations according to the received $b_c$ and $\langle v \rangle_2$ by using formulas (11) and (12):

$$u = g \bullet b_c \bullet s_1 \quad (11)$$

$$w = rec\left(u, \langle v \rangle_2\right) \quad (12)$$

obtaining $w$, and sending $w$ to the authentication center, so that when authenticating that $w=[v]_2$, the authentication center sends a first certificate $Cert_B$ to the first user equipment, to certify that the first user equipment owns the long-term public key $P_B$.

$s_1$, $e_1 \leftarrow \chi$; $s$, $e$, and $e' \leftarrow \chi$.

Because long-term public keys of two user equipments performing negotiation can be authenticated, it is ensured that the second user equipment determines that it is the first user equipment that performs key negotiation with the second user equipment, thereby ensuring security of key negotiation.

Still further, after step 105, the method may further include the following step:

Step 304. The first user equipment sends the long-term public key $P_B$, the temporary private key $y_B$, and the semaphore $v_B$ of the first user equipment to the second user equipment, so that the second user equipment obtains the session key $K$ within a preset error range according to a long-term private key $s_A$ and the temporary private key $x_A$ that correspond to the second user equipment, the long-term public key $P_B$, the temporary private key $y_B$, and the semaphore $v_B$.

The preset error range is $\left[-\frac{q}{8}, \frac{q}{8}\right)$.

FIG. 6 is a flowchart of Embodiment 4 of a session key negotiation method according to the present invention. As shown in FIG. 6, the method in this embodiment includes the following steps.

Step 401. Second user equipment receives a long-term public key $P_B$, a semaphore $v_B$, and a temporary private key $y_B$ that are of first user equipment performing session negotiation with the second user equipment and that are sent by the first user equipment.

In this embodiment, session key negotiation between the first user equipment and the second user equipment is performed in a distributed network environment. The first user equipment may perform the technical solution of the method shown in any one of FIG. 1 to FIG. 3. Implementation principles thereof are similar, and details are not described herein again.

Step 402. The second user equipment obtains a vector $\sigma_A$ according to a long-term private key $s_A$ and a temporary private key $x_A$ that correspond to the second user equipment, the long-term public key $P_B$, and the temporary private key $y_B$.

Step 403. The second user equipment performs the following operation within a preset error range according to the vector $\sigma_A$ and the semaphore $v_B$ by using a formula (13):

$$K = rec\left(\sigma_A, v_B\right) \quad (13)$$

obtaining a session key K corresponding to the second user equipment.

The preset error range is $\left[-\frac{q}{8}, \frac{q}{8}\right)$, and q is an even number and is not equal to 2.

In this embodiment, the first user equipment participating in the key negotiation publicly transmits the long-term public key $P_B$, the semaphore $v_B$, and the temporary private key $y_B$, and the second user equipment participating in the key negotiation receives the long-term public key $P_B$, the semaphore $v_B$, and the temporary private key $y_B$, and obtains the session key K corresponding to the second user equipment by using the formula $K=rec(\sigma_A, v_B)$ according to the vector $\sigma_A$ calculated and obtained according to its own long-term private key $s_A$ and temporary private key $x_A$, so that two parties of the key negotiation obtain the key K that is evenly distributed on {0,1} in terms of information theory, thereby ensuring security of the session key. In addition, because q is an even number, the problems in the prior art that traffic and calculation costs are increased are further effectively resolved.

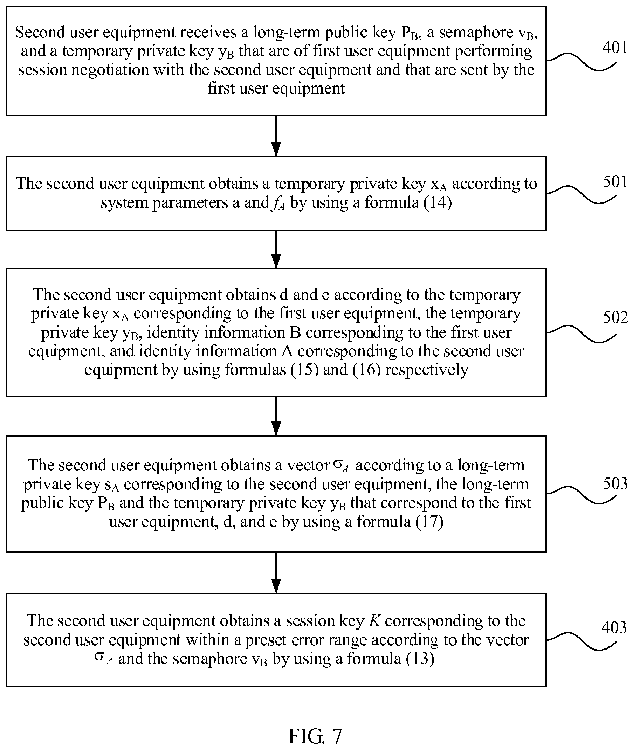

FIG. 7 is a flowchart of Embodiment 5 of a session key negotiation method according to the present invention. Based on the embodiment shown in FIG. 6, as shown in FIG. 7, a specific implementation of step 402 is:

Step 501. The second user equipment performs the following operation according to system parameters $a$ and $f_A$ by using a formula (14):

$$x_A = a \bullet r_A + f_A \in R_q \quad (14)$$

obtaining the temporary private key $x_A$.

Step 502. The second user equipment performs the following operation according to the temporary private key $x_A$ corresponding to the first user equipment, the temporary private key $y_B$, identity information B corresponding to the first user equipment, and identity information A corresponding to the second user equipment by using formulas (15) and (16):

$$d = H\left(x_A, B\right) \quad (15)$$

$$e = H\left(y_B, A\right) \quad (16)$$

respectively obtaining $d$ and $e$.

Step 503. The second user equipment performs the following operation according to the long-term private key $s_A$ corresponding to the second user equipment, the long-term public key $P_B$ and the temporary private key $y_B$ that correspond to the first user equipment, $d$, and $e$ by using a formula (17):

$$\sigma_A = g \bullet \left(y_B + d \bullet P_B\right) \bullet \left(r_A + e \bullet s_A\right) \in R_q \quad (17)$$

obtaining the vector $\sigma_A$. $a \in R_q = \mathbb{Z}_q\left[\zeta_m\right]$; $r_A \leftarrow \chi$; $f_B \leftarrow \chi$; g is a system parameter, and $g \in R$; R is a cyclotomic ring, and $R_q$ is a quotient ring defined on

$$R = \mathbb{Z}\left[\zeta_m\right] = \mathbb{Z}[x] / \Phi(x);$$ and m is a positive integer.

In this embodiment, in a case of a general cyclotomic polynomial ring, a decoding basis (a dual of a conjugate of a powerful basis) is used to represent an element on a ring R and is used for calculation, so that a relatively small element representation and calculation cost can be obtained.

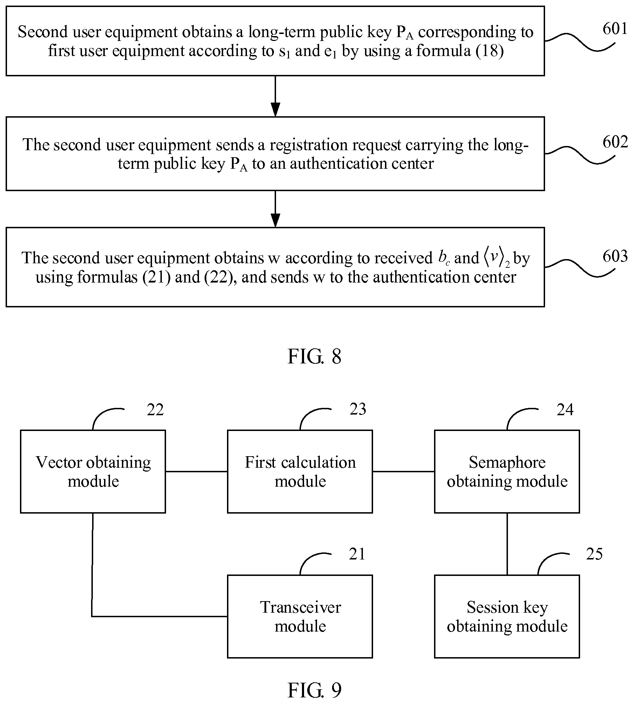

FIG. 8 is a flowchart of Embodiment 6 of a session key negotiation method according to the present invention. Based on the embodiment shown in FIG. 7, as shown in FIG. 8, the method may further include the following steps.

Step 601. The second user equipment performs the following operation according to $s_1$ and $e_1$ by using a formula (18):

$$P_A = a \bullet s_1 + e_1 \in R_q \quad (18)$$

obtaining a long-term public key $P_A$ corresponding to the first user equipment.

Step 602. The second user equipment sends a registration request carrying the long-term public key $P_A$ to an authentication center, so that when authenticating, according to the registration request, that $P_A \neq 0$, the authentication center performs the following operations according to $s, e,$ and $e'$ by using formulas (19) and (20):

$$b_c = a \bullet s + e \quad (19)$$

$$v = g \bullet b \bullet s + e' \quad (20)$$

obtaining $b_c,$ $[v]_2,$ and $\langle v \rangle_2,$ and returning $b_c$ and $\langle v \rangle_2$ to the second user equipment.

Step 603. The second user equipment performs the following operation according to the received $b_c$ and $\langle v \rangle_2$ by using formulas (21) and (22):

$$u = g \bullet b_c \bullet s_1 \quad (21)$$

$$w = rec\left(u, \langle v \rangle_2\right) \quad (22)$$

obtaining $w,$ and sending $w$ to the authentication center, so that when authenticating that $w = [v]_2,$ the authentication center sends a second certificate $Cert_A$ to the second user equipment, to certify that the second user equipment owns the long-term public key $P_A.$

$s_1, e_1 \leftarrow \chi; s, e,$ and $e' \leftarrow \chi.$

In this embodiment, because long-term public keys of two user equipments performing negotiation can be authenticated, it is ensured that the first user equipment determines that it is the second user equipment that performs key negotiation with the first user equipment, thereby ensuring security of key negotiation.

FIG. 9 is a schematic structural diagram of Embodiment 1 of a session key negotiation apparatus according to the present invention. As shown in FIG. 9, the apparatus in this embodiment may include a transceiver module 21, a vector obtaining module 22, a first calculation module 23, a semaphore obtaining module 24, and a session key obtaining module 25. The transceiver module 21 is configured to receive a long-term public key $P_A$ and a temporary public key $x_A$ that correspond to second user equipment performing session negotiation with the session key negotiation apparatus. The vector obtaining module 22 is configured to obtain a vector $\sigma_B$ according

to a long-term private key $s_B$ and a temporary private key $y_B$ that correspond to the session key negotiation apparatus, the long-term public key $P_A,$ and the temporary public key $x_A.$ The first calculation module 23 is configured to obtain $\bar{v}_B$ according to the vector $\sigma_B$ by using a formula $\bar{v}_B = dbl(\sigma_B).$ The semaphore obtaining module 24 is configured to obtain a semaphore $v_B$ according to $\bar{v}_B$ by using a formula $v_B = \langle \bar{v}_B \rangle_2.$ The session key obtaining module 25 is configured to obtain a session key $K$ according to the semaphore $v_B$ by using a formula

$$K = \left[\bar{v}_B\right]_2 = \left[\frac{2}{q} \bullet \bar{v}_B\right],$$ where $q$ is an even number and is not equal to 2.

The apparatus in this embodiment may be the first user equipment, and is configured to perform the technical solution of the method embodiment shown in FIG. 1. Implementation principles and technical effects thereof are similar, and details are not described herein again.

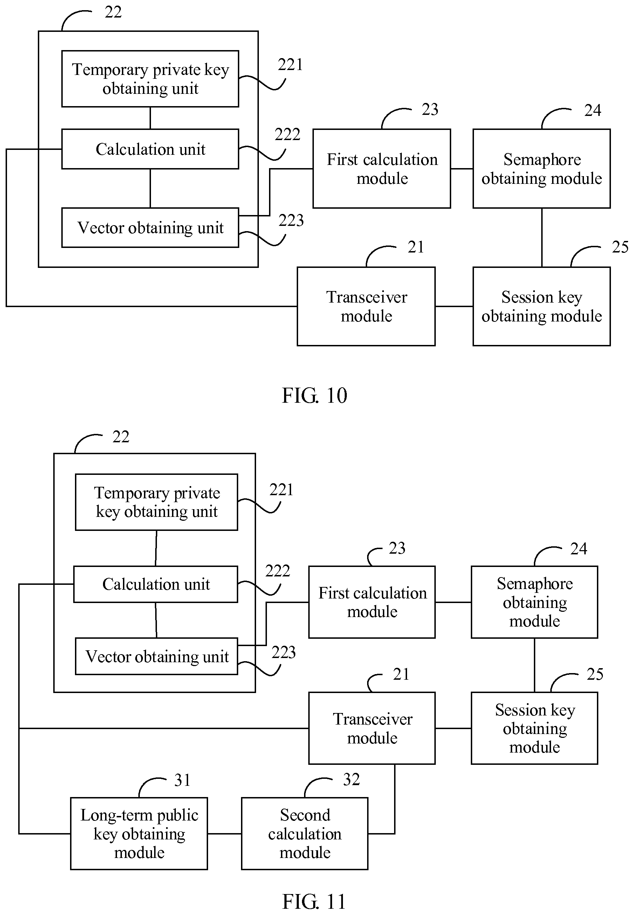

FIG. 10 is a schematic structural diagram of Embodiment 2 of a session key negotiation apparatus according to the present invention. As shown in FIG. 10, based on the structure of the apparatus shown in FIG. 9, in the apparatus in this embodiment, further, the vector obtaining module 22 specifically includes a temporary private key obtaining unit 221, a calculation unit 222, and a vector obtaining unit 223. The temporary private key obtaining unit 221 is configured to obtain the temporary private key $y_B$ according to system parameters $a$ and $f_B$ by using a formula $y_B = a \bullet r_B + f_B \in R_q.$ The calculation unit 222 is configured to obtain $d$ and $e$ according to the temporary public key $x_A$ corresponding to the second user equipment, the temporary private key $y_B$ corresponding to the first user equipment, identity information B corresponding to the session key negotiation apparatus, and identity information A corresponding to the second user equipment by using formulas $d = H(x_A, B)$ and $e = H(y_B, A)$ respectively. The vector obtaining unit 223 is configured to obtain $\sigma_B$ according to the long-term private key $s_B$ corresponding to the session key negotiation apparatus, the long-term public key $P_A$ and the temporary private key $x_A$ that correspond to the second user equipment, $d,$ and $e$ by using a formula $\sigma_B = g \bullet (x_A + d \bullet P_A) \bullet (r_B + e \bullet s_B) \in R_q.$

$a \in R_q = \mathbb{Z}_q\left[\zeta_m\right];$ $r_B \leftarrow \chi; f_B \leftarrow \chi; g$ is a system parameter, and $g \in R;$ $R$ is a cyclotomic ring, and $R_q$ is a quotient ring defined on $$R = \mathbb{Z}\left[\zeta_m\right] = \mathbb{Z}\left[x\right] \Big/ \Phi_m(x);$$ and m is a positive integer.

The apparatus in this embodiment may be configured to perform the technical solution of the method embodiment shown in FIG. 2. Implementation principles and technical effects thereof are similar, and details are not described herein again.

FIG. 11 is a schematic structural diagram of Embodiment 3 of a session key negotiation apparatus according to the present invention. As shown in FIG. 11, based on the structure of the apparatus shown in FIG. 10, further, the apparatus in this embodiment may further include a long-term public key obtaining module 31 and a second calculation module 32. The long-term public key obtaining module 31 is configured to obtain a long-term public key $P_B$ corresponding to the session key negotiation apparatus according to $s_1$ and $e_1$ by using a formula $P_B=a \cdot s_1+e_1 \in R_q$. The transceiver module 21 is further configured to send a registration request carrying the long-term public key $P_B$ to an authentication center, so that when authenticating the long-term public key $P_B$ according to the registration request, the authentication center obtains $b_c$, $[v]_2$, and $\langle v \rangle_2$ according to $s$, $e$, and $e'$ by using formulas $b_c=a \cdot s+e$ and $v=g \cdot b \cdot s+e'$, and returns $b_c$ and $\langle v \rangle_2$ to the session key negotiation apparatus. The second calculation module 32 is configured to obtain w according to the received $b_c$ and $\langle v \rangle_2$ by using formulas $u=g \cdot b_c \cdot s_1$ and $w=rec(u,\langle v \rangle_2)$. The transceiver module 21 is further configured to send w to the authentication center, so that when authenticating that $w=[v]_2$, the authentication center sends a first certificate $Cert_B$ to the session key negotiation apparatus, to certify that the session key negotiation apparatus owns the long-term public key $P_B$, where $s_1$, $e_1 \leftarrow \chi$; $s$, $e$, $e' \leftarrow \chi$.

Further, the transceiver module 21 is further configured to send the long-term public key $P_B$, the temporary private key $y_B$, and the semaphore $v_B$ of the session key negotiation apparatus to the second user equipment, so that the second user equipment obtains the session key $K$ within a preset error range according to a long-term private key $s_A$ and the temporary private key $x_A$ that correspond to the second user equipment, the long-term public key $P_B$, the temporary private key $y_B$, and the semaphore $v_B$.

The preset error range is $\left[ -\dfrac{q}{8}, \dfrac{q}{8} \right)$.

The apparatus in this embodiment may be configured to perform the technical solution of the method embodiment shown in FIG. 3. Implementation principles and technical effects thereof are similar, and details are not described herein again.

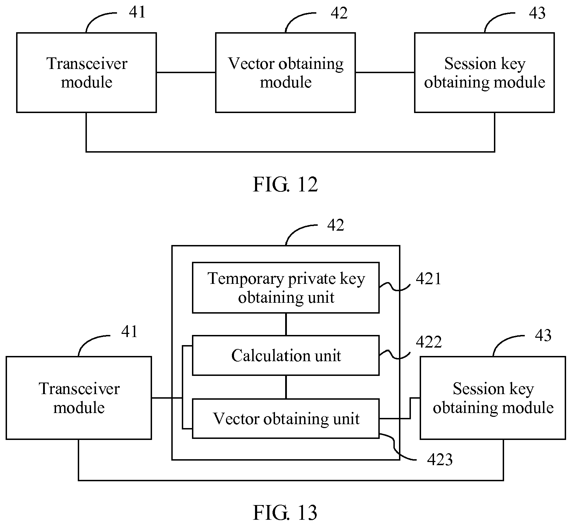

FIG. 12 is a schematic structural diagram of Embodiment 4 of a session key negotiation apparatus according to the present invention. As shown in FIG. 12, the apparatus includes: a transceiver module 41, a vector obtaining module 42, and a session key obtaining module 43. The transceiver module 41 is configured to receive a long-term public key $P_B$, a semaphore $v_B$, and a temporary private key $y_B$ that are of first user equipment performing session negotiation with the session key negotiation apparatus and that are sent by the first user equipment. The vector obtaining module 42 is configured to calculate and obtain a vector $\sigma_A$ according to a long-term private key $s_A$ and a temporary private key $x_A$ that correspond to the session key negotiation apparatus, the long-term public key $P_B$, and the temporary private key $y_B$. The session key obtaining module 43 is configured to obtain a session key $K$ corresponding to the session key negotiation apparatus within a preset error range according to the vector $\sigma_A$ and the semaphore $v_B$ by using a formula $K=rec(\sigma_A,v_B)$.

The preset error range is $\left[ -\dfrac{q}{8}, \dfrac{q}{8} \right)$, and $q$ is an even number and is not equal to 2.

The apparatus in this embodiment may be the second user equipment, and is configured to perform the technical solution of the method embodiment shown in FIG. 6. Implementation principles and technical effects thereof are similar, and details are not described herein again.

FIG. 13 is a schematic structural diagram of Embodiment 5 of a session key negotiation apparatus according to the present invention. As shown in FIG. 13, based on the structure of the apparatus shown in FIG. 12, the vector obtaining module 42 includes a temporary private key obtaining unit 421, a calculation unit 422, and a vector obtaining unit 423. The temporary private key obtaining unit 421 is configured to obtain the temporary private key $x_A$ according to system parameters $a$ and $f_A$ by using a formula $x_A = a \cdot r_A + f_A \in R_q$. The calculation unit 422 is configured to obtain $d$ and $e$ according to the temporary private key $x_A$ corresponding to the first user equipment, the temporary private key $y_B$, identity information B corresponding to the first user equipment, and identity information A corresponding to the session key negotiation apparatus by using formulas $d=H(x_A,B)$ and $e=H(y_B,A)$ respectively. The vector obtaining unit 423 is configured to obtain the vector $\sigma_A$ according to the long-term private key $s_A$ corresponding to the session key negotiation apparatus, the long-term public key $P_B$ and the temporary private key $y_B$ that correspond to the first user equipment, $d$, and $e$ by using a formula $\sigma_A=g \cdot (y_B+d \cdot P_B) \cdot (r_A+e \cdot s_A) \in R_q$, where $a \in R_q = \mathbb{Z}_q\left[\zeta_m\right]$; $r_A \leftarrow \chi$, $f_A \leftarrow \chi$; $g$ is a system parameter, and $g \in R$ ; $R$ is a cyclotomic ring, and $R_q$ is a quotient ring defined $R = \mathbb{Z}[\zeta_m] = \mathbb{Z}[x] \Big/ \Phi(x)$ ; and m is a positive integer.

The apparatus in this embodiment may be configured to perform the technical solution of the method embodiment shown in FIG. 7. Implementation principles and technical effects thereof are similar, and details are not described herein again.

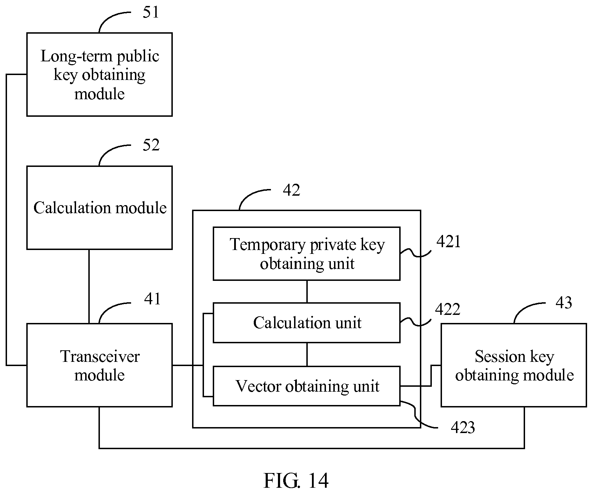

FIG. 14 is a schematic structural diagram of Embodiment 6 of a session key negotiation apparatus according to the present invention. As shown in FIG. 14, based on the embodiment shown in FIG. 13, further, the apparatus may further include a long-term public key obtaining module 51 and a calculation module 52. The long-term public key obtaining module 51 is configured to obtain a long-term public key $P_A$ corresponding to the first user equipment according to $s_1$ and $e_1$ by using a formula $P_A = a \cdot s_1 + e_1 \in R_q$. The transceiver module 41 is further configured to send a registration request carrying the long-term public key $P_A$ to an authentication center, so that when authenticating, according to the registration request, that $P_A \neq 0$, the authentication center obtains $b_c$, $[v]_2$, and $\langle v \rangle_2$ according to $s$, $e$, and $e'$ by using formulas $b_c = a \cdot s + e$ and $v = g \cdot b \cdot s + e'$, and returns $b_c$ and $\langle v \rangle_2$ to the session key negotiation apparatus. The calculation module 52 is configured to obtain $w$ according to the received $b_c$ and $\langle v \rangle_2$ by using formulas $u = g \cdot b_c \cdot s_1$ and $w = rec(u, \langle v \rangle_2)$. The transceiver module 41 is further configured to send $w$ to the authentication center, so that when authenticating that $w = [v]_2$, the authentication center sends a second certificate $Cert_A$ to the session key negotiation apparatus, to certify that the session key negotiation apparatus owns the long-term public key $P_A$, where $s_1$, $e_1 \leftarrow \chi$; $s$, $e$, $e' \leftarrow \chi$.

The apparatus in this embodiment may be configured to perform the technical solution of the method embodiment shown in FIG. 8. Implementation principles and technical effects thereof are similar, and details are not described herein again.

The present invention further provides a session key negotiation system. The system includes first user equipment and second user equipment that performs session negotiation with the first user equipment. The first user equipment is configured to perform the technical solutions of the method embodiment shown in any one of FIG. 1 to FIG. 3, and the second user equipment is configured to implement the technical solutions of the method embodiment shown in any one of FIG. 6 to FIG. 8. Implementation principles and technical effects thereof are similar, and details are not described herein again.

The present invention further provides a session key negotiation apparatus. The apparatus includes a processor, a memory, and a communications interface. The memory is configured to store executable program code. The processor reads the executable program code stored in the memory, to run a program corresponding to the executable program code.

The communications interface receives a long-term public key $P_A$ and a temporary public key $x_A$ that correspond to second user equipment performing session negotiation with the session key negotiation apparatus.

The processor obtains a vector $\sigma_B$ according to a long-term private key $s_B$ and a temporary private key $y_B$ that correspond to the session key negotiation apparatus, the long-term public key $P_A$, and the temporary public key $x_A$ ; obtains $\overline{v}_B$ according to the vector $\sigma_B$ by using a formula $v_B = dbl(\sigma_B)$; obtains a semaphore $v_B$ according to $\overline{v}_B$ by using a formula $v_B = \langle \overline{v}_B \rangle_2$; and obtains a session key $K$ according to the semaphore $v_B$ by using

$$K = \left[\overline{v}_B\right]_2 = \left[\frac{2}{q} \cdot \overline{v}_B\right],$$

a formula where $q$ is an even number and is not equal to 2.

In this embodiment, the session key negotiation apparatus is the first user equipment, and is configured to perform the technical solution of the method embodiment shown in any one of FIG. 1 to FIG. 3. Implementation principles and technical effects thereof are similar, and details are not described herein again.

The present invention further provides a session key negotiation apparatus. The apparatus includes a processor, a memory, and a communications interface. The memory is configured to store executable program code. The processor reads the executable program code stored in the memory, to run a program corresponding to the executable program code.

The communications interface receives a long-term public key $P_B$, a semaphore $v_B$, and a temporary private key $y_B$ that are of first user equipment performing session negotiation with the session key negotiation apparatus and that are sent by the first user equipment.

The processor obtains a vector $\sigma_A$ according to a long-term private key $s_A$ and a temporary private key $x_A$ that correspond to the session key negotiation apparatus, the long-term public key $P_B$, and the temporary private key $y_B$; and obtains a session key K corresponding to the session key negotiation apparatus within a preset error range according to the vector $\sigma_A$ and the semaphore $v_B$ by using a formula $K = rec(\sigma_A, v_B)$, where the preset error range is $\left[-\frac{q}{8}, \frac{q}{8}\right)$, and $q$ is an even number and is not equal to 2.

In this embodiment, the session key negotiation apparatus is the second user equipment, and is configured to perform the technical solution of the method embodiment shown in any one of FIG. 6 to FIG. 8. Implementation principles and technical effects thereof are similar, and details are not described herein again.

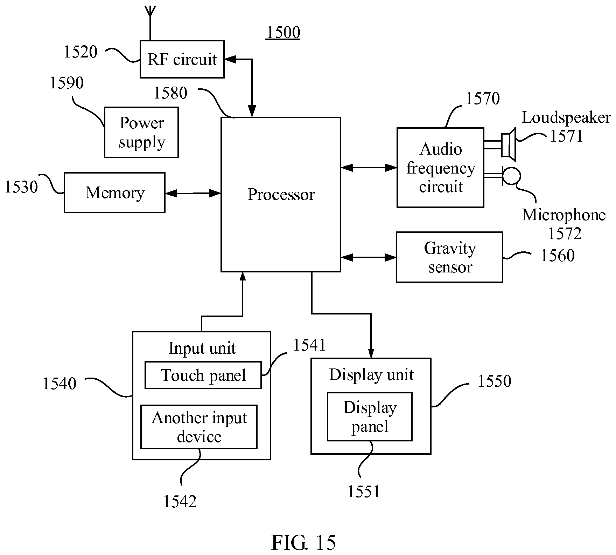

FIG. 15 is a schematic structural diagram of user equipment according to an embodiment of the present invention. The user equipment provided in this embodiment of the present invention may be configured to implement the methods implemented in the embodiments of the present invention that are shown in FIG. 3 to FIG.

8. For ease of description, only a part related to this embodiment of the present invention is shown. For specific technical details that are not disclosed, refer to the embodiments of the present invention that are shown in FIG. 3 to FIG. 8.

The user equipment may be a terminal device, such as a mobile phone, a tablet computer, a notebook computer, a UMPC (Ultra-mobile Personal Computer, ultra-mobile personal computer), a netbook, or a PDA (Personal Digital Assistant, personal digital assistant). This embodiment of the present invention is described by using an example in which the user equipment is a mobile phone. FIG. 15 is a block diagram of a part of a structure of a mobile phone 1500 related to the embodiments of the present invention.

As shown in FIG. 15, the mobile phone 1500 includes an RF (radio frequency, radio frequency) circuit 1520, a memory 1530, an input unit 1540, a display unit 1550, a gravity sensor 1560, an audio frequency circuit 1570, a processor 1580, a power supply 1590, and the like. Persons skilled in the art may understand that the structure of the mobile phone shown in FIG. 15 does not constitute a limitation to the mobile phone. The mobile phone may include more or fewer components than those shown in the figure, or combine some components, or have a different component arrangement.

The following specifically describes, with reference to FIG. 15, the components included in the mobile phone 1500.

The RF circuit 1520 may be configured to receive and send signals during an information receiving and sending process or a call process. Particularly, the RF circuit 1520 receives downlink information from a base station, then sends the downlink information to the processor 1580 for processing, and sends uplink data to the base station. Generally, the RF circuit includes but is not limited to: an antenna, at least one amplifier, a transceiver, a coupler, an LNA (low noise amplifier, low noise amplifier), and a duplexer. In addition, the RF circuit 1520 may further communicate with a network and another device by means of wireless communication. The wireless communication may comply with any communication standard or protocol, including but not limited to: Global System for Mobile Communications (Global System of Mobile Communication, GSM for short), general packet radio service (General Packet Radio Service, GPRS for short), Code Division Multiple Access (Code Division Multiple Access, CDMA for short), Wideband Code Division Multiple Access (Wideband Code Division Multiple Access, WCDMA for short), Long Term Evolution (Long Term Evolution, LTE for short), e-mail, and short messaging service (Short Messaging Service, SMS for short).

The memory 1530 may be configured to store a software program and a module, and the processor 1580 runs the software program and the module that are stored in the memory 1530, to perform various function applications and data processing of the mobile phone 1500. The memory 1530 may mainly include a program storage area and a data storage area. The program storage area may store an operating system, an application required by at least one function (such as a sound playback function and an image play function), and the like. The data storage area may store data (such as audio data, image data, and an address book) created according to use of the mobile phone 1500. In addition, the memory 1530 may include a high-speed random access memory, and may further include a non-volatile memory, for example, at least one magnetic disk storage device, a flash memory, or another volatile solid state storage device.

The input unit 1540 may be configured to receive input digit or character information, and generate keyboard signal input related to user settings and function control of the mobile phone 1500. Specifically, the input unit 1540 may include a touchscreen 1541 and another input device 1542. The touchscreen 1541, also referred to as a touch panel, may collect a touch operation (such as an operation of a user on or near the touchscreen 1541 by using any suitable object or accessory such as a finger or a stylus) of a user on or near the touchscreen, and drive a corresponding connection apparatus according to a preset program. Optionally, the touchscreen 1541 may include a touch detection apparatus and a touch controller. The touch detection apparatus detects a touch position of the user, detects a signal generated by the touch operation, and sends the signal to the touch controller. The touch controller receives touch information from the touch detection apparatus, converts the touch information into touch point coordinates, and sends the touch point coordinates to the processor 1580. Moreover, the touch controller can receive a command from the processor 380, and executes the command. In addition, the touchscreen 1541 may be a resistive touchscreen, a capacitive touchscreen, an infrared touchscreen, a surface wave sound touchscreen, or the like. In addition to the touchscreen 1541, the input unit 1540 may further include the another input device 1542. Specifically, the another input device 1542 may include but is not limited to: one or more of a physical keyboard, a function key (such as a volume control key or a power switch key), a track ball, a mouse, or a joystick.

The display unit 1550 may be configured to display information entered by the user or information provided for the user, and various menus of the mobile phone 1500. The display unit 1550 may include a display panel 351. Optionally, the display panel 1541 may be configured by using a liquid crystal display (Liquid Crystal Display, LCD for short), an organic light-emitting diode (Organic Light-Emitting Diode, OLED for short), or the like. Further, the touchscreen 1541 may cover the display panel 1551. After detecting a touch operation on or near the touchscreen 1541, the touchscreen 1541 sends the touch operation to the processor 1580, to determine a type of a touch event. Then, the processor 1580 provides corresponding visual output on the display panel 1551 according to the type of the touch event. Although in FIG. 15, the touchscreen 1541 and the display panel 1551 are used as two independent components to implement input and output functions of the mobile phone 1500, in some embodiments, the touchscreen 1541 and the display panel 1551 may be integrated to implement the input and output functions of the mobile phone 1500.

The gravity sensor (gravity sensor) 1560 may detect magnitude of acceleration of the mobile phone in various directions (generally on three axes), may detect magnitude and a direction of gravity when static, and may be applied to an application that recognizes an attitude (for example, switching between landscape orientation and portrait orientation, a related game, and magnetometer attitude calibration) of the mobile phone, a function related to vibration recognition (such as a pedometer and a knock), and the like.

The mobile phone 1500 may include another sensor, for example, an optical sensor. Specifically, the optical sensor may include an ambient light sensor and an optical proximity sensor. The ambient light sensor may adjust luminance of the display panel 1541 according to brightness of the ambient light. The optical proximity sensor may detect whether an object approaches or touches the mobile phone, and may switch off the display panel 1541 and/or backlight when the mobile phone 1500 is moved to the ear. Another sensor, such as a gyroscope, a barometer, a hygrometer, a thermometer, or an infrared sensor, may be configured in the mobile phone 1500, and details are not described herein again.

The audio frequency circuit 1570, a loudspeaker 1571, and a microphone 1572 may provide an audio interface between the user and the mobile phone 1500. The audio frequency circuit 1570 may convert received audio data into an electrical signal, and transmits the electrical signal to the loudspeaker 1571. The loudspeaker converts the electrical signal into a sound signal and outputs the sound signal. In another aspect, the microphone 1572 converts a collected sound signal into an electrical signal, the audio frequency circuit 1570 receives the electrical signal and converts the electrical signal into audio data, and outputs the audio data to the RF circuit 1520, so that the RF circuit 1520 sends the audio data to another mobile phone, or transmits the audio data to the memory 1530 for further processing.

The processor 1580 is a control center of the mobile phone 1500, connects all parts of the mobile phone by using various interfaces and lines, and performs various functions of the mobile phone 1500 and processes data by running or performing the software program and/or the module that are/is stored in the memory 1530 and invoking data stored in the memory 1530, to perform overall monitoring on the mobile phone. Optionally, the processor 1580 may include one or more processing units. Preferably, the processor 1580 may integrate an application processor and a modem processor. The application processor mainly processes an operating system, a user interface, an application pro-

gram, and the like. The modem processor mainly processes radio communication. It may be understood that the modem processor may not be integrated into the processor 380.

The mobile phone 1500 further includes a power supply 1590 (for example, a battery) that supplies power to the components. Preferably, the power supply may connect to the processor 1580 logically by using a power management system, to manage functions such as charging, discharging, and power consumption management by using the power management system.

Although not shown, the mobile phone 1500 may further include a Wireless Fidelity (wireless fidelity, WiFi for short) module, a Bluetooth module, and the like. Details are not described herein.

In this embodiment of the present invention, the memory 1530 is further configured to store executable program code. The input unit 1540 is further configured to receive a long-term public key $P_A$ and a temporary public key $x_A$ that correspond to second user equipment performing session negotiation with the session key negotiation apparatus. The processor 1580 is further configured to: obtain a vector $\sigma_B$ according to a long-term private key $s_B$ and a temporary private key $y_B$ that correspond to the session key negotiation apparatus, the long-term public key $P_A$, and the temporary public key $x_A$; obtain $\bar{v}_B$ according to the vector $\sigma_B$ by using a formula $\bar{v}_B = dbl(\sigma_B)$; obtain a semaphore $v_B$ according to $\bar{v}_B$ by using a formula $v_B = \langle \bar{v}_B \rangle_2$; and obtain a session key $K$ according to the semaphore $v_B$ by using a formula

$$K = \left[ \bar{v}_B \right]_2 = \left[ \frac{2}{q} \bullet \bar{v}_B \right],$$

where $q$ is an even number and is not equal to 2.

Alternatively, in this embodiment of the present invention, the memory 1530 is further configured to store executable program code. The input unit 1540 is further configured to receive a long-term public key $P_B$, a semaphore $v_B$, and a temporary private key $y_B$ that are of first user equipment performing session negotiation with the session key negotiation apparatus and that are sent by the first user equipment. The processor 1580 is further configured to: obtain a vector $\sigma_A$ according to a long-term private key $s_A$ and a temporary private key $x_A$ that correspond to the session key negotiation apparatus, the long-term public key $P_B$, and the temporary private key $y_B$; and obtain a session key K corresponding to the session key negotiation apparatus within a preset error range according to the vector $\sigma_A$ and the semaphore $v_B$ by using a formula $K = rec(\sigma_A, v_B)$, where the preset error range is

$$\left[ -\frac{q}{8}, \frac{q}{8} \right),$$

and $q$ is an even number and is not equal to 2.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A session key negotiation method, comprising:

receiving, by first user equipment, a long-term public key $P_A$ and a temporary public key $x_A$ that correspond to second user equipment performing session negotiation with the first user equipment;

obtaining, by the first user equipment, a vector $\sigma_B$ according to a long-term private key $s_B$ and a temporary private key that correspond to the first user equipment, the long-term public key $P_A$, and the temporary public key $x_A$;

obtaining, by the first user equipment, $\overline{v}_B$ according to the vector $\sigma_B$ by using a formula $\overline{v}_B = dbl(\sigma_B)$;

obtaining, by the first user equipment, a semaphore $v_B$ according to $\overline{v}_B$ by using a formula $v_B = \langle \overline{v}_B \rangle_2$; and

obtaining, by the first user equipment, a session key $K$ according to the semaphore $v_B$ by using a formula

$$K = [\overline{v}_B]_2 = \left[ \frac{2}{q} \cdot \overline{v}_B \right],$$

wherein $q$ is an even number and is not equal to 2.

2. The method according to claim 1, wherein the obtaining, by the first user equipment, a vector $\sigma_B$ according to a long-term private key $s_B$ and a temporary private key $y_B$ that correspond to the first user equipment, the long-term public key $P_A$, and the temporary public key $x_A$ comprises:

obtaining, by the first user equipment, the temporary private key $y_B$ according to system parameters $a$ and $f_B$ by using a formula $y_B = a \cdot r_B + f_B \in R_q$;

obtaining, by the first user equipment, $d$ and $e$ according to the temporary public key $x_A$ corresponding to the second user equipment, the temporary private key $y_B$ corresponding to the first user equipment, identity information B corresponding to the first user equipment, and identity information A corresponding to the second user equipment by using formulas $d = H(x_A, B)$ and $e = H(y_B, A)$ respectively; and

obtaining, by the first user equipment, $\sigma_B$ according to the long-term private key $s_B$ corresponding to the first user equipment, the long-term public key $P_A$ and the temporary private key $x_A$ that correspond to the second user equipment, $d$, and $e$ by using a formula $\sigma_B = g \cdot (x_A + d \cdot P_A) \cdot (r_B + e \cdot s_B) \in R_q$, wherein

$a \in R_q = \mathbb{Z}_q[\zeta_m]$; $r_B \leftarrow \chi$; $f_B \leftarrow \chi$; $g$ is a system parameter, and $g \in R$; $R$ is a cyclotomic ring, and $R_q$ is a quotient ring defined on

$$R = \mathbb{Z}[\zeta_m] = \mathbb{Z}[x] \Big/ \Phi_m(x);$$

and m is a positive integer.

3. The method according to claim 1 or 2, further comprising:

obtaining, by the first user equipment, a long-term public key $P_B$ corresponding to the first user equipment according to $s_1$ and $e_1$ by using a formula $P_B = a \cdot s_1 + e_1 \in R_q$;

sending, by the first user equipment, a registration request carrying the long-term public key $P_B$ to an authentication center, so that when authenticating, according to the registration request, that the long-term public key $P_B \neq 0$, the authentication center obtains $b_c$, $[v]_2$, and $\langle v \rangle_2$ according to $s$, $e$, and $e'$ by using formulas $b_c = a \cdot s + e$ and $v = g \cdot b \cdot s + e'$, and returns $b_c$ and $\langle v \rangle_2$ to the first user equipment; and

obtaining, by the first user equipment, $w$ according to the received $b_c$ and $\langle v \rangle_2$ by using formulas $u = g \cdot b_c \cdot s_1$ and $w = rec(u, \langle v \rangle_2)$, and sending $w$ to the authentication center, so that when authenticating that $w = [v]_2$, the authentication center sends a first certificate $Cert_B$ to the first user equipment, to certify that the first user equipment owns the long-term public key $P_B$, wherein $s_1$, $e_1 \leftarrow \chi$; $s$, $e$, and $e' \leftarrow \chi$.

4. The method according to any one of claims 1 to 3, further comprising:

sending, by the first user equipment, the long-term public key $P_B$, the temporary private key $y_B$, and the semaphore $v_B$ of the first user equipment to the second user equipment, so that the second user equipment obtains the session key $K$ within a preset error range according to a long-term private key $s_A$ and the temporary private key $x_A$ that correspond to the second user equipment, the long-term public key $P_B$, the temporary private key $y_B$, and the semaphore $v_B$, wherein the preset error range is $\left[-\dfrac{q}{8}, \dfrac{q}{8}\right)$.

5. A session key negotiation method, comprising:

receiving, by second user equipment, a long-term public key $P_B$, a semaphore $v_B$, and a temporary private key $y_B$ that are of first user equipment performing session negotiation with the second user equipment and that are sent by the first user equipment;

obtaining, by the second user equipment, a vector $\sigma_A$ according to a long-term private key $s_A$ and a temporary private key $x_A$ that correspond to the second user equipment, the long-term public key $P_B$, and the temporary private key $y_B$; and

obtaining, by the second user equipment, a session key K corresponding to the second user equipment within the preset error range according to the vector $\sigma_A$ and the semaphore $v_B$ by using a formula $K=rec(\sigma_A, v_B)$, wherein the preset error range is $\left[-\dfrac{q}{8}, \dfrac{q}{8}\right)$, and q is an even number and is not equal to 2.

6. The method according to claim 5, wherein the obtaining, by the second user equipment, a vector $\sigma_A$ according to a long-term private key $s_A$ and a temporary private key $x_A$ that correspond to the second user equipment, the long-term public key $P_B$, and the temporary private key $y_B$ comprises:

obtaining, by the second user equipment, the temporary private key $x_A$ according to system parameters $a$ and $f_A$ by using a formula $x_A=a\cdot r_A+f_A \in R_q$;

obtaining, by the second user equipment, $d$ and $e$ according to the temporary private key $x_A$ corresponding to the first user equipment, the temporary private key $y_B$, identity information B corresponding to the first user equipment, and identity information A corresponding to the second user equipment by using formulas $d=H(x_A,B)$ and $e=H(y_B,A)$ respectively; and

obtaining, by the second user equipment, the vector $\sigma_A$ according to the long-term private key $s_A$ corresponding to the second user equipment, the long-term public key $P_B$ and the temporary private key $y_B$ that correspond to the first user equipment, $d$, and $e$ by using a formula $\sigma_A=g\cdot(y_B+d\cdot P_B)\cdot(r_A+e\cdot s_A) \in R_q$, wherein

$a \in R_q = \mathbb{Z}_q\left[\zeta_m\right]$; $r_A \leftarrow \chi$; $f_A \leftarrow \chi$; g is a system parameter, and $g \in R$; R is a cyclotomic ring, and $R_q$ is a quotient ring defined on

$$R = \mathbb{Z}\left[\zeta_m\right] = \mathbb{Z}\left[x\right]\Big/\Phi\left(x\right)$$

; and m is a positive integer.

7. The method according to claim 5 or 6, further comprising:

obtaining, by the second user equipment, a long-term public key $P_A$ corresponding to the first user equipment according to $s_1$ and $e_1$ by using a formula $P_A=a\cdot s_1+e_1 \in R_q$;

sending, by the second user equipment, a registration request carrying the long-term public key $P_A$ to an authentication center, so that when authenticating, according to the registration request, that $P_A \neq 0$, the authentication center obtains $b_c$, $[v]_2$, and $\langle v \rangle_2$ according to s, e, and e' by using formulas $b_c=a\cdot s+e$ and $v=g\cdot b\cdot s+e'$, and returns $b_c$ and $\langle v \rangle_2$ to the second user equipment; and

obtaining, by the second user equipment, w according to the received $b_c$ and $\langle v \rangle_2$ by using formulas $u=g\cdot b_c\cdot s_1$ and $w=rec(u, \langle v \rangle_2)$, and sending w to the authentication center, so that when authenticating that $w=[v]_2$, the authentication center sends a second certificate $Cert_A$ to the second user equipment, to certify that the second user equipment owns the long-term public key $P_A$, wherein
$s_1$, $e_1 \leftarrow \chi$; s, e, and e' $\leftarrow \chi$.

8. A session key negotiation apparatus, comprising:

a transceiver module, configured to receive a long-term public key $P_A$ and a temporary public key $x_A$ that correspond to second user equipment performing session negotiation with the session key negotiation apparatus;

a vector obtaining module, configured to obtain a vector $\sigma_B$ according to a long-term private key $s_B$ and a temporary private key $y_B$ that correspond to the session key negotiation apparatus, the long-term public key $P_A$, and the temporary public key $x_A$;

a first calculation module, configured to obtain

$\bar{v}_B$ according to the vector $\sigma_B$ by using a formula $\bar{v}_B = dbl(\sigma_B)$;

a semaphore obtaining module, configured to obtain a semaphore $v_B$ according to $\bar{v}_B$ by using a formula $v_B = \langle \bar{v}_B \rangle_2$; and

a session key obtaining module, configured to obtain a session key $K$ according to the semaphore $v_B$ by using a formula

$$K = [\bar{v}_B]_2 = \left[\frac{2}{q} \cdot \bar{v}_B\right],$$ wherein

$q$ is an even number and is not equal to 2.

9. The apparatus according to claim 8, wherein the vector obtaining module specifically comprises:

a temporary private key obtaining unit, configured to obtain the temporary private key $y_B$ according to system parameters $a$ and $f_B$ by using a formula $y_B = a \cdot r_B + f_B \in R_q$;

a calculation unit, configured to obtain $d$ and $e$ according to the temporary public key $x_A$ corresponding to the second user equipment, the temporary private key $y_B$ corresponding to the first user equipment, identity information B corresponding to the first user equipment, and identity information A corresponding to the second user equipment by using formulas $d = H(x_A, B)$ and $e = H(y_B, A)$ respectively; and

a vector obtaining unit, configured to obtain $\sigma_B$ according to the long-term private key $s_B$ corresponding to the session key negotiation apparatus, the long-term public key $P_A$ and the temporary private key $x_A$ that correspond to the second user equipment, $d$, and $e$ by using a formula $\sigma_B = g \cdot (x_A + d \cdot P_A) \cdot (r_B + e \cdot s_B) \in R_q$, wherein $a \in R_q = \mathbb{Z}_q[\zeta_m]$; $r_B \leftarrow \chi$; $f_B \leftarrow \chi$; g is a system parameter, and $g \in R$; $R$ is a cyclotomic ring, and $R_q$ is a quotient ring defined on

$$R = \mathbb{Z}[\zeta_m] = \mathbb{Z}[x] \big/ \Phi_m(x);$$ and m is a positive integer.

10. The apparatus according to claim 8 or 9, further comprising:

a long-term public key obtaining module, configured to obtain a long-term public key $P_B$ corresponding to the session key negotiation apparatus according to $s_1$ and $e_1$ by using a formula $P_B = a \cdot s_1 + e_1 \in R_q$, wherein the transceiver module is further configured to send a registration request carrying the long-term public key $P_B$ to an authentication center, so that when authenticating, according to the registration request, that the long-term public key $P_B \neq 0$, the authentication center obtains $b_c$, $[v]_2$, and $\langle v \rangle_2$ according to $s$, $e$, and $e'$ by using formulas $b_c = a \cdot s + e$ and $v = g \cdot b \cdot s + e'$, and returns $b_c$ and $\langle v \rangle_2$ to the session key negotiation apparatus; and

a second calculation module, configured to obtain w according to the received $b_c$ and $\langle v \rangle_2$ by using formulas $u = g \cdot b_c \cdot s_1$ and $w = rec(u, \langle v \rangle_2)$, wherein

the transceiver module is further configured to send $w$ to the authentication center, so that when authenticating that $w = [v]_2$, the authentication center sends a first certificate $Cert_B$ to the session key negotiation apparatus, to certify that the session key negotiation apparatus owns the long-term public key $P_B$, wherein $s_1$, $e_1 \leftarrow \chi$; $s$, $e$, and $e' \leftarrow \chi$.

11. The apparatus according to claim 8, wherein the transceiver module is further configured to send the long-term public key $P_B$, the temporary private key $y_B$, and the semaphore $v_B$ of the session key negotiation apparatus to the second user equipment, so that the second user equipment obtains the session key $K$ within a preset error range according to the long-term private key $s_A$ and the temporary private key $x_A$ that correspond to the second user equipment, the long-term public key $P_B$, the temporary private key $y_B$, and the semaphore $v_B$, wherein

the preset error range is $\left[-\frac{q}{8}, \frac{q}{8}\right)$.

12. A session key negotiation apparatus, comprising:

a transceiver module, configured to receive a long-term public key $P_B$, a semaphore $v_B$, and a temporary private key $y_B$ that are of first user equipment performing session negotiation with the session key negotiation apparatus and that are sent by the first user equipment;

a vector obtaining module, configured to obtain a vector $\sigma_A$ according to a long-term private key $s_A$ and a temporary private key $x_A$ that correspond to the session key negotiation apparatus, the long-term public key $P_B$, and the temporary private key $y_B$; and

a session key obtaining module, configured to obtain a session key K corresponding to the session key negotiation apparatus within the preset error range according to the vector $\sigma_A$ and the semaphore $v_B$ by using a formula $K = rec(\sigma_A, v_B)$, wherein

the preset error range is $\left[-\frac{q}{8}, \frac{q}{8}\right)$, and $q$ is an even number and is not equal to 2.

13. The apparatus according to claim 12, wherein the vector obtaining module comprises:

a temporary private key obtaining unit, configured to obtain the temporary private key $x_A$ according to system parameters $a$ and $f_A$ by using a formula $x_A = a \cdot r_A + f_A \in R_q$;
a calculation unit, configured to obtain $d$ and $e$ according to the long-term public key $P_B$ and the temporary private key $x_A$ that correspond to the first user equipment, the temporary private key $y_B$, identity information B corresponding to the first user equipment, and identity information A corresponding to the session key negotiation apparatus by using formulas $d = H(x_A, B)$ and $e = H(y_B, A)$ respectively; and
a vector obtaining unit, configured to obtain the vector $\sigma_A$ according to the long-term private key $s_A$ corresponding to the session key negotiation apparatus, the long-term public key $P_B$ and the temporary private key $y_B$ that correspond to the first user equipment, $d$, and $e$ by using a formula $\sigma_A = g \cdot (y_B + d \cdot P_B) \cdot (r_A + e \cdot s_A) \in R_q$, wherein $a \in R_q = \mathbb{Z}_q[\zeta_m]$; $r_A \leftarrow \chi$; $f_A \leftarrow \chi$; g is a system parameter, and $g \in R$; $R$ is a cyclotomic ring, and $R_q$ is a quotient ring defined on $R = \mathbb{Z}[\zeta_m] = \mathbb{Z}[x] / \Phi(x)$; and m is a positive integer.

14. The apparatus according to claim 12 or 13, further comprising:

a long-term public key obtaining module, configured to obtain a long-term public key $P_A$ corresponding to the first user equipment according to $s_1$ and $e_1$ by using a formula $P_A = a \cdot s_1 + e_1 \in R_q$, wherein
the transceiver module is further configured to send a registration request carrying the long-term public key $P_A$ to an authentication center, so that when authenticating, according to the registration request, that $P_A \neq 0$, the authentication center obtains $b_c$, $[v]_2$, and $\langle v \rangle_2$ according to $s$, $e$, and $e'$ by using formulas $b_c = a \cdot s + e$ and $v = g \cdot b \cdot s + e'$, and returns $b_c$ and $\langle v \rangle_2$ to the session key negotiation apparatus; and
a calculation module, configured to obtain $w$ according to the received $b_c$ and $\langle v \rangle_2$ by using for-

mulas $u = g \cdot b_c \cdot s_1$ and $w = rec(u, \langle v \rangle_2)$, wherein the transceiver module is further configured to send $w$ to the authentication center, so that when authenticating that $w = [v]_2$, the authentication center sends a second certificate $Cert_A$ to the session key negotiation apparatus, to certify that the session key negotiation apparatus owns the long-term public key $P_A$, wherein $s_1$, $e_1 \leftarrow \chi$; $s$, $e$, and $e' \leftarrow \chi$.

15. A session key negotiation system, comprising: first user equipment and second user equipment that performs session negotiation with the first user equipment, wherein
the first user equipment is the session key negotiation apparatus according to any one of claims 8 to 11, and the second user equipment is the session key negotiation apparatus according to any one of claims 12 to 14.

FIG. 1

| System parameter |
|---|
| • Parameters of a Ring-LWE problem: $q, m, n = \varphi(m), \chi; \quad H(\cdot):\{0,1\}^{n} \rightarrow \chi$ : Map a string whose length is n to a sample on x |
| • $a \leftarrow_{x} R_{q}, g = \prod_{p}(1-\zeta_{p})$, where p traverses all odd primes of m |

Second user equipment $\{(P_{A},s_{A}) \mid P_{A}=a\cdot s_{A}+e_{A} \in R_{q}, s_{A}, e_{A} \leftarrow \chi\}$    First user equipment $\{(P_{B},s_{B}) \mid P_{B}=a\cdot s_{B}+e_{B} \in R_{q}, s_{B}, e_{B} \leftarrow \chi\}$

$x_{A}=a\cdot r_{A}+f_{A} \in R_{q}$

$r_{A}, f_{A} \leftarrow \chi$

$\{x_{A}, P_{A}\}$ $\Longrightarrow$

(1) $y_{B}=a\cdot r_{B}+f_{B} \in R_{q}, r_{B}, f_{B} \leftarrow \chi$

(2) $\sigma_{B}=g\cdot(x_{A}+d\cdot P_{A})\cdot(r_{B}+e\cdot s_{B})$

$d=H(x_{A},B), e=H(y_{B},A)$

(3) $SK_{B}=[\bar{v}_{B}]_{2}, \bar{v}_{B}=dbl(\sigma_{B}), v_{B}=\langle\bar{v}_{B}\rangle_{2}$

$\{y_{B}, v_{B}, P_{B}\}$ $\Longleftarrow$

(1) $\sigma_{A}=g\cdot(y_{B}+e\cdot P_{B})\cdot(r_{A}+d\cdot s_{A})$

$d=H(x_{A},B), e=H(y_{B},A)$

(2) $SK_{A}=rec(\sigma_{A},v_{B})$

FIG. 2

First user equipment receives a long-term public key $P_A$ and a temporary public key $x_A$ that correspond to second user equipment performing session negotiation with the first user equipment

101

The first user equipment obtains a vector $\sigma_B$ according to a long-term private key $s_B$ and a temporary private key $y_B$ that correspond to the first user equipment, the long-term public key $P_A$, and the temporary public key $x_A$

102

The first user equipment obtains $\overline{v}_B$ according to the vector $\sigma_B$ by using a formula (1)

103

The first user equipment obtains a semaphore $v_B$ according to $\overline{v}_B$ by using a formula (2)

104

The first user equipment obtains a session key $K$ according to the semaphore $v_B$ by using a formula (3)

105

FIG. 3

First user equipment receives a long-term public key $P_A$ and a temporary public key $x_A$ that correspond to second user equipment performing session negotiation with the first user equipment — 101

Obtain a temporary private key $y_B$ according to system parameters a and $f_B$ by using a formula (4) — 201

Obtain d and e according to the temporary public key $x_A$ corresponding to the second user equipment, the temporary private key $y_B$, identity information B corresponding to the first user equipment, and identity information A corresponding to the second user equipment by using formulas (5) and (6) respectively — 202

The first user equipment obtains $\overline{v}_B$ according to the vector $\sigma_B$ by using a formula (1) — 103

The first user equipment obtains a semaphore $\overline{v}_B$ according to $v_B$ by using a formula (2) — 104

The first user equipment obtains a session key $K$ according to the semaphore $v_B$ by using a formula (3) — 105

FIG. 4

First user equipment obtains a long-term public key $P_B$ corresponding to the first user equipment according to $s_1$ and $e_1$ by using a formula (8) ⟩ 301

The first user equipment sends a registration request carrying the long-term public key $P_B$ to an authentication center ⟩ 302

The first user equipment obtains w according to received $b_c$ and $\langle v \rangle_2$ by using formulas (11) and (12), and sends w to the authentication center ⟩ 303

The first user equipment receives a long-term public key $P_A$ and a temporary public key $x_A$ that correspond to second user equipment performing session negotiation with the first user equipment ⟩ 101

Obtain a temporary private key $y_B$ according to system parameters a and $f_B$ by using a formula (4) ⟩ 201

Obtain d and e according to the temporary public key $x_A$ corresponding to the second user equipment, the temporary private key $y_B$, identity information B corresponding to the first user equipment, and identity information A corresponding to the second user equipment by using formulas (5) and (6) respectively ⟩ 202

The first user equipment obtains $\overline{v}_B$ according to a vector $\sigma_B$ by using a formula (1) ⟩ 103

TO
FIG. 5B

FIG. 5A

CONT.
FROM
FIG. 5A

The first user equipment obtains a semaphore $\overline{v}_B$ according to $v_B$ by using a formula (2) — 104

The first user equipment obtains a session key $K$ according to the semaphore $v_B$ by using a formula (3) — 105

The first user equipment sends the long-term public key $P_A$, the temporary private key $y_B$, and the semaphore $v_B$ of the first user equipment to the second user equipment, so that the second user equipment obtains the session key $K$ within a preset error range according to a long-term private key $s_A$ and the temporary private key $x_A$ that correspond to the second user equipment, the long-term public key $P_A$, the temporary private key $y_B$, and the semaphore $v_B$ — 304

FIG. 5B

Second user equipment receives a long-term public key $P_B$, a semaphore $v_B$, and a temporary private key $y_B$ that are of first user equipment performing session negotiation with the second user equipment and that are sent by the first user equipment — 401

The second user equipment obtains a vector $\sigma_A$ according to a long-term private key $s_A$ and a temporary private key $x_A$ that correspond to the second user equipment, the long-term public key $P_B$, and the temporary private key $y_B$ — 402

The second user equipment obtains a session key $K$ corresponding to the second user equipment within a preset error range according to the vector $\sigma_A$ and the semaphore $v_B$ by using a formula (13) — 403

FIG. 6

Second user equipment receives a long-term public key $P_B$, a semaphore $v_B$, and a temporary private key $y_B$ that are of first user equipment performing session negotiation with the second user equipment and that are sent by the first user equipment ⌇ 401

The second user equipment obtains a temporary private key $x_A$ according to system parameters a and $f_A$ by using a formula (14) ⌇ 501

The second user equipment obtains d and e according to the temporary private key $x_A$ corresponding to the first user equipment, the temporary private key $y_B$, identity information B corresponding to the first user equipment, and identity information A corresponding to the second user equipment by using formulas (15) and (16) respectively ⌇ 502

The second user equipment obtains a vector $\sigma_A$ according to a long-term private key $s_A$ corresponding to the second user equipment, the long-term public key $P_B$ and the temporary private key $y_B$ that correspond to the first user equipment, d, and e by using a formula (17) ⌇ 503

The second user equipment obtains a session key $K$ corresponding to the second user equipment within a preset error range according to the vector $\sigma_A$ and the semaphore $v_B$ by using a formula (13) ⌇ 403

FIG. 7

Second user equipment obtains a long-term public key $P_A$ corresponding to first user equipment according to $s_1$ and $e_1$ by using a formula (18) — 601

The second user equipment sends a registration request carrying the long-term public key $P_A$ to an authentication center — 602

The second user equipment obtains w according to received $b_c$ and $\langle v \rangle_2$ by using formulas (21) and (22), and sends w to the authentication center — 603

FIG. 8

| Vector obtaining module 22 | First calculation module 23 | Semaphore obtaining module 24 |
|---|---|---|
| | Transceiver module 21 | Session key obtaining module 25 |

FIG. 9

FIG. 10

FIG. 11

41

Transceiver
module

42

Vector obtaining
module

43

Session key
obtaining module

FIG. 12

42

Temporary private key
obtaining unit

421

Calculation unit

422

41

Transceiver
module

Vector obtaining unit

423

43

Session key
obtaining module

FIG. 13

51

Long-term public
key obtaining
module

52

Calculation module

42

Temporary private key
obtaining unit — 421

41

Calculation unit — 422

Transceiver
module

Vector obtaining unit

43

Session key
obtaining module

423

FIG. 14

FIG. 15

# INTERNATIONAL SEARCH REPORT

International application No.

**PCT/CN2017/070797**

### A. CLASSIFICATION OF SUBJECT MATTER

H04L 9/08 (2006.01) i

According to International Patent Classification (IPC) or to both national classification and IPC

### B. FIELDS SEARCHED

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

WPI, EPODOC, CNPAT, CNKI, 3GPP, IEEE: public key   implicit   negotiate   public private key temporary long term session share MTI authenti+ regist+ consult encrypt decrypt

### C. DOCUMENTS CONSIDERED TO BE RELEVANT

| Category* | Citation of document, with indication, where appropriate, of the relevant passages | Relevant to claim No. |
|---|---|---|
| A | CN 105119885 A (CHONGQING UNIVERSITY OF TECHNOLOGY), 02 December 2015 (02.12.2015), description, paragraphs [0048]-[0084], and figure 1 | 1-15 |
| A | CN 1889433 A (SHANGHAI JIAO TONG UNIVERSITY et al.), 03 January 2007 (03.01.2007), the whole document | 1-15 |
| A | CN 101582906 A (THE PLA INFORMATION ENGINEERING UNIVERSITY), 18 November 2009 (18.11.2009), the whole document | 1-15 |
| A | CN 101521881 A (LIU, Jian, 02 September 2009 (02.09.2009), the whole document | 1-15 |
| A | WO 2009135444 A1 (CHINA INSTANT WIRELESS NETWORK COMMUNICATIONS CO., LTD.), 12 November 2009 (12.11.2009), the whole document | 1-15 |
| A | EP 2120389 A1 (HUAWEI TECHNOLOGIES CO., LTD.), 18 November 2009 (18.11.2009), the whole document | 1-15 |

☒ Further documents are listed in the continuation of Box C.        ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 March 2017 (06.03.2017) | **30 March 2017 (30.03.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LI, Tingting**<br><br>Telephone No.: (86-10) **61648276** |

Form PCT/ISA/210 (second sheet) (July 2009)

## INTERNATIONAL SEARCH REPORT

| | International application No. |
|---|---|
| | **PCT/CN2017/070797** |

**C (Continuation).     DOCUMENTS CONSIDERED TO BE RELEVANT**

| Category* | Citation of document, with indication, where appropriate, of the relevant passages | Relevant to claim No. |
|---|---|---|
| A | US 2011103589 A1 (CHINA WNCOMM CO., LTD.), 05 May 2011 (05.05.2011), the whole document | 1-15 |
| A | EP 2334008 A1 (TATA CONSULTANCY SERVICES LIMITED MAHARASHTRA), 15 June 2011 (15.06.2011), the whole document | 1-15 |

Form PCT/ISA/210 (continuation of second sheet) (July 2009)

## INTERNATIONAL SEARCH REPORT
### Information on patent family members

International application No.

**PCT/CN2017/070797**

| Patent Documents referred in the Report | Publication Date | Patent Family | Publication Date |
|---|---|---|---|
| CN 105119885 A | 02 December 2015 | None | |
| CN 1889433 A | 03 January 2007 | None | |
| CN 101582906 A | 18 November 2009 | None | |
| CN 101521881 A | 02 September 2009 | None | |
| WO 2009135444 A1 | 12 November 2009 | CN 101282211 A | 08 October 2008 |
| EP 2120389 A1 | 18 November 2009 | WO 2008113279 A1 | 25 September 2008 |
| | | US 2009232301 A1 | 17 September 2009 |
| | | CN 101272240 A | 24 September 2008 |
| US 2011103589 A1 | 05 May 2011 | WO 2009143765 A1 | 03 December 2009 |
| | | EP 2282442 A1 | 09 February 2011 |
| | | CN 101286840 A | 15 October 2008 |
| EP 2334008 A1 | 15 June 2011 | US 2012023336 A1 | 26 January 2012 |
| | | JP 2011125020 A | 23 June 2011 |
| | | CN 102098157 A | 15 June 2011 |
| | | JP 2016036166 A | 17 March 2016 |
| | | HK 1159349 A0 | 27 July 2012 |

Form PCT/ISA/210 (patent family annex) (July 2009)